# EUROPÄISCHE PATENTSCHRIFT

(11) **EP 3 288 911 B1**
(45) Veröffentlichungstag und Bekanntmachung des Hinweises auf die Patenterteilung: **09.01.2019**
(21) Anmeldenummer: 16717139.6
(22) Anmeldetag: 18.04.2016
(51) Int. Cl.: C04B 24/16, C04B 28/14, C04B 28/16

(54) **GIPSHALTIGE ZUSAMMENSETZUNG**
GYPSUM-CONTAINING COMPOSITION
COMPOSÉ GYPSEUX

(30) Priorität: 30.04.2015 EP 15165842
(43) Veröffentlichungstag der Anmeldung: 07.03.2018
(73) Patentinhaber: BASF SE, 67056 Ludwigshafen (DE)
(72) Erfinder: HILLESHEIM, Nina Susanne, 83308 Trostberg (DE); GEHRIG, Uwe, 83368 St. Georgen (DE)
(74) Vertreter: BASF IP Association
(86) Internationale Anmeldenummer: PCT/EP2016/058557
(87) Internationale Veröffentlichungsnummer: WO 2016/173874

(56) Entgegenhaltungen:
- WO-A1-2008/123389
- WO-A1-2014/114784

## Beschreibung

Die vorliegende Erfindung betrifft eine Zusammensetzung umfassend mindestens ein Bindemittel auf Basis von Calciumsulfat und mindestens ein Polymer, welches Alkoxylate von S-Vinylthioalkanolen als Monomere enthält. Gegenstand der Erfindung sind weiterhin Formkörper, insbesondere eine Gipskartonplatte, eine Gipswandbauplatte, ein Estrich oder eine Spachtelmasse, welche durch Abbinden der erfindungsgemäßen Zusammensetzung erhalten werden.

Der Begriff Gips wird im allgemeinen Sprachgebrauch sowohl für die Verbindung Calciumsulfat-Dihydrat als auch für das aus dieser Verbindung bestehende Gestein und den entsprechenden Baustoff, Calciumsulfat-Halbhydrat oder Anhydrit, verwendet. Calciumsulfat-Dihydrat kommt in der Natur in großen Lagerstätten vor, die beim Eindampfen von Meeren in der Erdgeschichte entstanden sind. Weiterhin wird Calciumsulfat-Dihydrat als Produkt oder Nebenprodukt bei verschiedenen Prozessen in der Industrie gewonnen, beispielsweise der RauchgasEntschwefelung, bei der Schwefeldioxid aus den Verbrennungsabgasen der Kohlekraftwerke mittels einer Calciumcarbonat- oder Calciumhydroxid-Aufschlämmung abgereichert wird.

Beim Erhitzen auf Temperaturen von 120-130 °C gibt das Calciumsulfat-Dihydrat einen Teil seines Kristallwassers ab und geht in das Calciumsulfat-Halbhydrat über. Vermischt man das Halbhydrat mit Wasser, dann bildet sich innerhalb von kurzer Zeit unter Erhärten der Masse das Dihydrat zurück.

Calciumsulfat-Halbhydrat ist ein wichtiges Bindemittel zur Herstellung von Mörteln, Spachtelmassen, Estrichen, Gussformen und insbesondere Gipskartonplatten. Weiterhin wird Anhydrid vor allem in Anhydrit-Fließestrichen eingesetzt, welche in unterschiedlichen Mörtelkonsistenzen in Bauwerke eingepumpt werden.

Eine wichtige Gruppe der Zusatzmittel für diese Bindemittel auf Basis von Calciumsulfat stellen Fließmittel dar, welche zur Erleichterung der Verarbeitbarkeit und insbesondere der Verbesserung der Fließfähigkeit eingesetzt werden. Als Fließmittel werden in diesem Einsatzbereich häufig Ligninsulfonate, Naphthalinsulfonate und/oder Melamin-Formaldehyd-Sulfit-Kondensationsprodukte eingesetzt. Diese Verbindungsklassen haben sich technisch bewährt, von Nachteil ist aber, dass sie die Verarbeitbarkeit nur über einen relativ kurzen Zeitraum aufrecht erhalten.

Die Verwendung von Copolymeren auf Basis von Polycarboxylatethern als Fließmittel und Konsistenzerhalter für Bindemittel auf Basis von Calciumsulfat ist ebenfalls hinlänglich bekannt. Derartige Copolymere bestehen im Wesentlichen aus einem olefinisch ungesättigten Monocarbonsäure-Comonomer oder einem Ester oder einem Salz davon und/oder einem olefinisch ungesättigten Sulfonsäure-Comonomer auf der einen Seite, und einem Comonomer mit Polyetherfunktion auf der anderen Seite.

Polymere Fließmittel belegen die Oberflächen der Bindemittel-Komponenten und bewirken so eine höhere Fließfähigkeit der Partikel in der feuchten Zusammensetzung, wodurch beträchtliche Mengen an Anmachwasser eingespart werden können. Die Reduzierung der Wassermenge hat aber auch den Effekt, dass die erhaltenen ausgehärteten Produkte eine erhöhte Festigkeit und Dichte aufweisen. Ein weiterer Vorteil besteht darin, sich durch die Zugabe von Copolymeren auf Basis von Polycarboxylatethern zur bevorzugten und weit günstigeren β-Form des Halbhydrats den Wasser-Gips-Werten der teuren α-Form anzunähern.

Aus US 7,056,964 B2 ist eine Mischung beschrieben, die mit einer definierten Menge Anmachwasser zu einer Slurry verarbeitet werden kann, welche als Fließestrich mit einer hohen Festigkeit verwendet werden kann. Die Mischung besteht aus einem Calciumsulfathemihydrat, bei dem mindestens 25% in der β-Form vorliegen müssen, und einem Polycarboxylatfließmittel. Beim Fließmittel handelt es sich um ein Copolymer eines Oxyalkylenalkylethers und einer ungesättigten Dicarbonsäure.

WO 0249983 beschreibt die Verwendung von Fließmitteln auf Polycarboxylatether-Basis aus wasserlöslichen Copolymeren für Anhydrit basierte Fließestriche. Die beschriebenen Verbindungen liefern gute Fließ- und Verlaufseigenschaften in dem Bindemittelsystem und eine relativ lange Verarbeitbarkeit.

DE 20 58 120 offenbart 2-Hydroxyethylvinylsulfid umfassende kationische Polymere, welche mittels eines zweistufigen Verfahrens hergestellt werden. In einem ersten Schritt wird 2-Hydroxyethylvinylsulfid, ggf. zusammen mit Comonomeren wie Acrylaten polymerisiert. Die erhaltenen (Co)polymere werden in einem zweiten Schritt mit Alkylierungsmitteln umgesetzt, wobei die S-Atome unter Bildung von Sulfoniumgruppen alkyliert werden. Als Alkylierungsmittel können Alkylsulfate wie Dimethylsulfat, Alkylhalogenide oder Alkylenoxide verwendet werden, wobei bei der Verwendung von Alkylenoxiden anorganische oder organische Säuren in äquimolaren Mengen eingesetzt werden müssen.

WO 2014114784 betrifft ein als Härtungsbeschleuniger verwendbares Additiv für hydraulisch abbindende Massen, umfassend a) mindestens ein polymeres Dispergiermittel, das Struktureinheiten mit anionischen oder anionogenen Gruppen und Struktureinheiten mit Polyetherseitenketten umfasst, wobei in der Formel IIa) auch schwefelhaltige Seitenketten umfasst sind, b) mindestens eine spezielle Sulfonsäureverbindung und c) Calciumsilikathydratpartikel.

Teilweise treten bei den Polymeren des Standes der Technik Probleme bei der Herstellung auf. Beispielsweise zeigen Allylalkoholethoxylate bei der Polymerisation oder Copolymerisation keine besonders hohe Reaktivität und führen auch zu einigen Nebenreaktionen. Isoprenolethoxylate sind ebenfalls nicht sehr reaktiv und beim Herstellprozess kann es zur Entstehung von Isopren kommen. Einige der Alkoxylate, beispielsweise Hydroxybutylvinyletherethoxylate (HBVE-ethoxylate) sind insbesondere im sauren Milieu nur bedingt hydrolysestabil.

Aufgabe der vorliegenden Erfindung war es deshalb, Dispergiermittel mit hoher Dosiereffizienz für Bindemittelzusammensetzungen auf Basis von Calciumsulfat bereit zu stellen. Eine Teilaufgabe der Erfindung war es hierbei, dass die Dispergiermittel durch eine effiziente Polymerisationsreaktion hergestellt werden können, wobei Monomere auf Basis von Alkoxylaten eingesetzt werden sollten. Als eine weitere Teilaufgabe der vorliegenden Erfindung sollten hierfür Alkoxylatmonomere bereitgestellt werden, die sowohl als Monomere als auch einpolymerisiert in das Polymer, insbesondere im Vergleich zu Hydroxybutylvinyletherethoxylaten, eine erhöhte Hydrolysestabilität aufweisen.

Gelöst wurde diese Aufgabe durch eine Zusammensetzung umfassend
A) mindestens ein Bindemittels auf Basis von Calciumsulfat und
B) mindestens ein Polymer, erhältlich durch Polymerisation von Monomeren, umfassend eine ungesättigte Verbindungen der allgemeinen Formel (I) 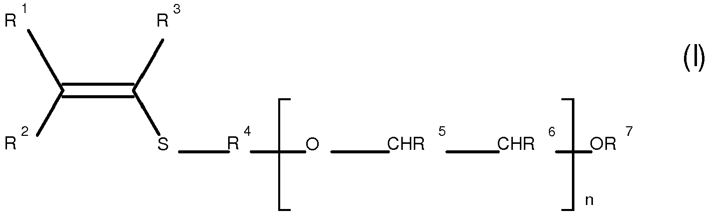 wobei
   - R¹, R², R³: unabhängig voneinander, gleich oder verschieden, H, CH₃,
   - R⁴: lineares oder verzweigtes C₁-C₃₀-Alkylen,
   - R⁵, R⁶: unabhängig voneinander, gleich oder verschieden, H, C₁-C₂₀-Alkyl, C₃-C₁₅-Cycloalkyl, Aryl, -CH₂-O-C₁-C₂₀-Alkyl, CH₂-O-C₂-C₂₀-Alkenyl, wobei R⁵ und R⁶ auch gemeinsam ein C₃-C₆-Alkylen bilden können,
   - R⁷: H, C₁-C₄-Alkyl, 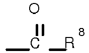
   - R⁸: C₁-C₂₂-Alkyl, C₂-C₂₂-Alkenyl, und
   - n: eine ganze Zahl von 2 bis 200 bedeuten.

Überraschend hat sich hierbei ergeben, dass nicht nur die gestellte Aufgabe in vollem Umfang gelöst werden konnte, sondern dass die erfindungsgemäßen Dispergiermittel eine hervorragende Verflüssigungswirkung aufweisen, erkennbar an der Dosierung des Dispergiermittels um ein bestimmtes Fließmaß zu erreichen. Insbesondere konnten überraschenderweise im Vergleich zu bekannten Dispergiermitteln nach dem Stand der Technik, wie etwa Polyphosphatether auf Methacrylatbasis, eine bessere Dosiereffizienz für Bindemittelzusammensetzungen auf Basis von Calciumsulfat erreicht werden.

Ausdrücke der Form Cₐ-C_{b} bezeichnen im Rahmen dieser Erfindung chemische Verbindungen oder Substituenten mit einer bestimmten Anzahl von Kohlenstoffatomen. Die Anzahl an Kohlenstoffatomen kann aus dem gesamten Bereich von a bis b, einschließlich a und b gewählt werden, a ist mindestens 1 und b immer größer als a. Eine weitere Spezifizierung der chemischen Verbindungen oder der Substituenten erfolgt durch Ausdrücke der Form Cₐ-C_{b}-V. V steht hierbei für eine chemische Verbindungsklasse oder Substituentenklasse, beispielsweise für Alkylverbindungen oder Alkylsubstituenten.

Im Einzelnen haben die für die verschiedenen Substituenten angegebenen Sammelbegriffe folgende Bedeutung:
C₁-C₂₂-Alkyl: geradkettige oder verzweigte Kohlenwasserstoffreste mit bis zu 22 Kohlenstoffatomen, beispielsweise C₁-C₁₀-Alkyl oder C₁₁-C₂₂-Alkyl, bevorzugt C₁-C₁₀-Alkyl beispielsweise C₁-C₃-Alkyl, wie Methyl, Ethyl, Propyl, Isopropyl, oder C₄-C₆-Alkyl, n-Butyl, sec-Butyl, tert.-Butyl, 1,1-Dimethylethyl, Pentyl, 2-Methylbutyl, 1,1-Dimethylpropyl, 1,2-Dimethylpropyl, 2,2-Dimethylpropyl, 1-Ethylpropyl, Hexyl, 2-Methylpentyl, 3-Methyl-pentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 2-Ethylbutyl, 1,1,2-Trimethylpropyl, 1,2,2-Trimethylpropyl, 1-Ethyl-1-methylpropyl, 1-Ethyl-2-methylpropyl, oder C₇-C₁₀-Alkyl, wie Heptyl, Octyl, 2-Ethyl-hexyl, 2,4,4-Trimethylpentyl, 1,1,3,3-Tetramethylbutyl, Nonyl oder Decyl sowie deren Isomere.
C₂-C₂₀-Alkenyl: ungesättigte, geradkettige oder verzweigte Kohlenwasserstoffreste mit 2 bis 20 Kohlenstoffatomen und einer, zwei oder drei, bevorzugt einer Doppelbindungen in einer beliebigen Position, beispielsweise C₂-C₁₀-Alkenyl oder C₁₁-C₂₀-Alkenyl, bevorzugt C₂-C₁₀-Alkenyl wie C₂-C₄-Alkenyl, wie Ethenyl, 1-Propenyl, 2-Propenyl, 1-Methylethenyl, 1-Bute-nyl, 2-Butenyl, 3-Butenyl, 1-Methyl-1-propenyl, 2-Methyl-1-propenyl, 1-Methyl-2-pro-penyl, 2-Methyl-2-propenyl, oder C₅-C₆-Alkenyl, wie 1-Pentenyl, 2-Pentenyl, 3-Pentenyl, 4-Pentenyl, 1-Methyl-1-butenyl, 2-Methyl-1-butenyl, 3-Methyl-1-butenyl, 1-Methyl-2-butenyl, 2-Methyl-2-butenyl, 3-Methyl-2-butenyl, 1-Methyl-3-butenyl, 2-Methyl-3-butenyl, 3-Methyl-3-butenyl, 1,1-Dimethyl-2-propenyl, 1,2-Dimethyl-1-propenyl, 1,2-Dimethyl-2-propenyl, 1-Ethyl-1-propenyl, 1-Ethyl-2-propenyl, 1-Hexenyl, 2-Hexenyl, 3-Hexenyl, 4-Hexenyl, 5-Hexenyl, 1-Methyl-1-pentenyl, 2-Methyl-1-pentenyl, 3-Methyl-1-pentenyl, 4-Methyl-1-pentenyl, 1-Methyl-2-pentenyl, 2-Methyl-2-pentenyl, 3-Methyl-2-pentenyl, 4-Methyl-2-pentenyl, 1-Methyl-3-pentenyl, 2-Methyl-3-pentenyl, 3-Methyl-3-pentenyl, 4-Methyl-3-pentenyl, 1-Methyl-4-pentenyl, 2-Methyl-4-pentenyl, 3-Methyl-4-pentenyl, 4-Methyl-4-pentenyl, 1,1-Dimethyl-2-butenyl, 1,1-Dimethyl-3-butenyl, 1,2-Dimethyl-1-butenyl, 1,2-Dimethyl-2-butenyl, 1,2-Dimethyl-3-butenyl, 1,3-Dimethyl-1-butenyl, 1,3-Dimethyl-2-butenyl, 1,3-Dimethyl-3-butenyl, 2,2-Dimethyl-3-butenyl, 2,3-Dimethyl-1-butenyl, 2,3-Dimethyl-2-butenyl, 2,3-Dimethyl-3-butenyl, 3,3-Dimethyl-1-butenyl, 3,3-Dimethyl-2-butenyl, 1-Ethyl-1-butenyl, 1-Ethyl-2-butenyl, 1-Ethyl-3-butenyl, 2-Ethyl-1-butenyl, 2-Ethyl-2-butenyl, 2-Ethyl-3-butenyl, 1,1,2-Trimethyl-2-propenyl, 1-Ethyl-1-methyl-2-propenyl, 1-Ethyl-2-methyl-1-propenyl oder 1-Ethyl-2-methyl-2-propenyl, sowie C₇-C₁₀-Alkenyl, wie die Isomere von Heptenyl, Octenyl, Nonenyl oder Decenyl.
C₁-C₃₀-Alkylen: geradkettige oder verzweigte Kohlenwasserstoffreste mit 1 bis 30 Kohlenstoffatomen, beispielsweise C₁-C₁₀-Alkylen oder C₁₁-C₂₀-Alkylen, bevorzugt C₁-C₁₀-Alkylen, insbesondere Methylen, Dimethylen, Trimethylen, Tetramethylen, Pentamethylen oder Hexamethylen.
C₃-C₁₅-Cycloalkyl: monocyclische, gesättigte Kohlenwasserstoffgruppen mit 3 bis zu 15 Kohlenstoffringgliedern, bevorzugt C₃-C₈-Cycloalkyl wie Cyclopropyl, Cyclobutyl, Cyclopentyl, Cyclohexyl, Cycloheptyl oder Cyclooctyl sowie ein gesättigtes oder ungesättigtes cyclisches System wie z. B. Norbornyl oder Norbenyl.
Aryl: ein ein- bis dreikerniges aromatisches Ringsystem enthaltend 6 bis 14 Kohlenstoffringglieder, z. B. Phenyl, Naphthyl oder Anthracenyl, bevorzugt ein ein- bis zweikerniges, besonders bevorzugt ein einkerniges aromatisches Ringsystem.

Bevorzugt stehen R⁴ in der allgemeinen Formel (I) für eine C₂-C₄-Alkylengruppe, R⁵, R⁶ unabhängig voneinander, gleich oder verschieden für eine Gruppe ausgewählt aus H, -CH₃, -CH₂-CH₃, -C₃-C₁₁-Alkyl, C₁₂-C₂₂-Alkyl, Phenyl, -CH₂-O-C₁-C₁₀-Alkyl, CH₂-O-C₂-C₁₀-Alkenyl, R⁷ für H oder C₁-C₄-Alkyl und n für 5 bis 140.

In einer bevorzugten Ausführungsform der Erfindung handelt es sich bei den ungesättigten Verbindungen (I) um solche der allgemeinen Formel (Ia) 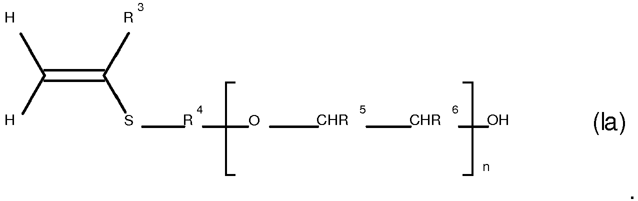 wobei R³ für H oder Methyl, R⁴ für eine lineare oder verzweigte C₂-C₁₀-Alkylengruppe, bevorzugt eine lineare C₂-C₁₀-Gruppe, insbesondere eine lineare oder verzweigte, bevorzugt eine lineare C₂-C₄-Alkylengruppe. Beispiele umfassen 1,2-Ethylen-, 1,3-Propylen- und 1,4-Butylengruppen, und ganz besonders bevorzugt handelt es sich bei R⁴ um eine 1,2-Ethylengruppe -CH₂CH₂-.

Bei der Gruppe -[-O-CHR⁵-CHR⁶-]ₙ- in Formel (la) handelt es sich um eine Polyalkoxygruppe umfassend n Alkoxygruppen -O-CHR⁵-CHR⁶-, wobei die Alkoxygruppen jeweils gleich oder verschieden sein können. Bei R⁵ und R⁶ handelt es sich unabhängig voneinander bevorzugt um H, Methyl oder Ethyl, insbesondere bevorzugt H oder Methyl und ganz besonders H, mit der Maßgabe, dass die Summe der Kohlenstoffatome in den Resten R⁵ und R⁶ pro Alkoxygruppe jeweils 0 bis 2 beträgt. Mit anderen Worten gesagt, umfasst die Polyalkoxygruppe also Gruppen ausgewählt aus der Gruppe von Ethoxy-, Propoxy- und Butoxygruppen. Sofern verschiedene Alkoxygruppen anwesend sind, können diese in beliebiger Reihenfolge angeordnet sein, beispielsweise statistisch, alternieren oder blockweise. In einer bevorzugten Ausführungsform handelt es sich bei mindestens 50 mol %, bevorzugt bei mindestens 80 mol % der Alkoxygruppen um Ethyoxygruppen. Besonders bevorzugt handelt es sich ausschließlich um Ethoxygruppen, d.h. R⁵ und R⁶ sind H.

In Formel (la) steht n für eine Zahl von 5 bis 160, besonders bevorzugt 10 bis 140, ganz besonders bevorzugt 20 bis 140 und beispielsweise 20 bis 30.

In einer weiteren besonders bevorzugten Ausführungsform der Erfindung handelt es sich bei den ungesättigten Verbindungen (I) um solche der allgemeinen Formel (Ib), 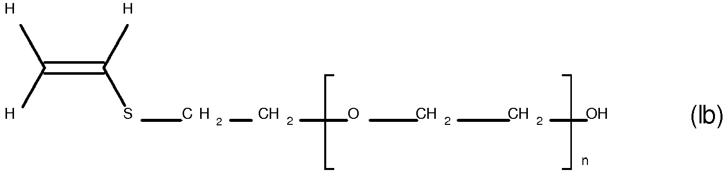 wobei n für eine Zahl von 20 bis 140, bevorzugt 60 bis 140 steht.

Die Herstellung der Verbindungen (I), insbesondere der Verbindungen der Formel (la) kann insbesondere durch Alkoxylierung von ungesättigten Verbindungen der allgemeinen Formel (II) 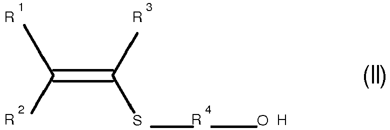 erfolgen. Hierzu setzt man die Verbindung (II) mit der gewünschten Menge von Alkylenoxiden bzw. Alkylenetheroxiden, insbesondere C₂- bis C₄-Alkylenoxiden, besonders bevorzugt Ethylenoxid um.

Die Durchführung einer Alkoxylierung ist dem Fachmann prinzipiell bekannt. Hierbei empfiehlt es sich regelmäßig, Säuren als Katalysator zur Alkoxylierung zu vermeiden. In einer bevorzugten Ausführungsform der Erfindung handelt sich bei der Alkoxylierung um eine basenkatalysierte Alkoxylierung. Dazu kann die als Ausgangsmaterial verwendete Verbindung (II) in einem Druckreaktor mit basischen Katalysatoren, insbesondere Alkalihydroxiden, bevorzugt Kaliumhydroxid oder mit Alkalialkoholaten wie beispielsweise Kaliummethylat versetzt werden.

Die Alkoxylierung kann aber auch mittels anderer Methoden vorgenommen werden. Beispielsweise können Doppelhydroxidtone, wie in DE 4325237 A1 beschrieben, eingesetzt werden oder es können Doppelmetallcyanid-Katalysatoren (DMC-Katalysatoren) verwendet werden. Geeignete DMC-Katalysatoren sind beispielsweise in der DE 10243361 A1, insbesondere in den Abschnitten [0029] bis [0041] sowie der dort zitierten Literatur, offenbart. Beispielsweise können Katalysatoren vom Zn-Co-Typ eingesetzt werden. Zur Durchführung der Reaktion kann der Alkohol (R¹)(R²)-CH-CH₂-OH mit dem Katalysator versetzt, die Mischung wie oben beschrieben entwässert und mit den Alkylenoxiden wie beschrieben umgesetzt werden. Es werden üblicherweise nicht mehr als 1000 ppm Katalysator bezüglich der Mischung eingesetzt und der Katalysator kann aufgrund dieser geringen Menge im Produkt verbleiben. Die Katalysatormenge kann in der Regel geringer sein als 1.000 ppm, beispielsweise 250 ppm oder weniger.

In einer bevorzugten Ausführungsform der Erfindung umfassen die erfindungsgemäßen Polymere mindestens ein weiteres von den Verbindungen der allgemeinen Formel (I) verschiedenes Monomer (weiteres Monomer). Selbstverständlich können auch mehrere von den Verbindungen der allgemeinen Formel (I) verschiedene Monomere im Polymer enthalten sein.

Besonders bevorzugt handelt es sich bei dem mindestens einem weiteren Monomeren um ein monoethylenisch ungesättigtes Monomer.

Geeignete weitere Monomere sind C₂-C₂₄ Alkene, beispielsweise Ethen, Propen, 1-Buten, 2-Buten, Isobuten, Diisobuten, 1-Hexen, 1-Hepten, 1-Octen, 1-Nonen, 1-Decen, 1-Dodecen, 1-Octadecen.

Geeignete weitere Monomere sind auch konjugierte C₄ - C₁₀ Diene, beispielsweise Butadien, Isopren oder Chloropren.

Bei dem weiteren Monomer, insbesondere monoethylenisch ungesättigten weiteren Monomer, kann es sich insbesondere um ein mindestens eine Säuregruppe umfassendes Monomer handeln, wobei die Säuregruppe auch ganz oder teilweise neutralisiert sein kann. Es kann sich hierbei insbesondere um Alkalimetallsalze, Erdalkalimetallsalze, Ammoniumsalze oder Salze organischer Ammoniumionen handeln. Bevorzugt kann es sich um ein Monomer umfassend mindestens eine Säuregruppe ausgewählt aus der Reihe Carbonsäure-, Sulfonsäure-, Phophorsäure- oder Phosphonsäuregruppe handeln.

Beispiele eines geeigneten weiteren Monomers mit Carbonsäuregruppen umfassen C₃-C₁₂ monoethylenisch ungesättigte Mono- oder Dicarbonsäuren, ihre Anhydride oder Salze wie Acrylsäure, Methacrylsäure, (Meth)acrylsäureanhydrid, Crotonsäure, Maleinsäure, Maleinsäureanhydrid, Fumarsäure, Itaconsäure, Mesaconsäure, Citraconsäure oder Methylenmalonsäure und ihre Ammonium- oder Alkalisalze. Die Säuren können ganz oder teilweise in neutralisierter Form eingesetzt werden.

Beispiele eines geeigneten weiteren Monomers mit Phosphorsäure- bzw. Phosphonsäuregruppe umfassen monoethylenisch ungesättigte Phosphonsäure- oder (Poly)phosphorsäureester und ihre Salze wie Vinylphosphonsäure oder Ester von Hydroxyethyl-, Hydroxypropyl- oder Hydroxybutyl(meth)acrylat mit (Poly)phosphorsäure und ihre Alkali und Ammoniumsalze, Phosphorsäuremonovinylester, Allylphosphonsäure, Phosphorsäuremonoallylester, 3-Butenylphosphonsäure, Phosphorsäure(mono-3-butenyl)ester, Phosphorsäuremono-(4-vinyloxybutyl)ester, Phosphorsäuremono-(-2-hydroxy-3-vinyloxy-propyl)ester, Phosphorsäuremono-(1-phosphonoxymethyl-2-vinyloxy-ethyl)-ester, Phosphorsäuremono-(3-allyloxy-2-hydroxy-propyl)ester, Phosphorsäuremono-2-(allylox-1-phosphonoxymethyl-ethyl)ester, 2-Hydroxy-4-vinyloxymethyl-1,3,2-dioxaphosphol, 2-Hydroxy-4-allyloxymethyl-1,3,2-dioxaphosphol. Es können auch Salze und/oder Ester, insbesondere C₁-C₈-Mono-, Di- sowie gegebenenfalls Trialkylester der Phosphorsäure und/oder Phosphonsäuregruppen aufweisenden Monomere eingesetzt werden.

Beispiel eines geeigneten weiteren Monomers mit Sulfonsäuregruppe umfassen monoethylenisch ungesättigte Sulfonsäuren und ihre Salze wie Vinylsulfonsäure, 2-Acrylamido-2-methylpropanesulfonsäure, 2-Acrylamidomethyldodecylsulfonsäure, 2-(Meth)acryloxyethansulfonsäure, 3-(Meth)acryloxypropansulfonsäure, Allyloxybenzolsulfonsäure, Vinylbenzolsulfonsäure, Vinyltoluolsulfonsäure, Allylsulfonsäure, Methallylsulfonsäure und ihre entsprechenden Ammonium- und Alkalimetallsalze.

Geeignete weitere Monomere sind auch Ester, Amide und Imide monoethylenisch ungesättigter Mono- oder Dicarbonsäuren, insbesondere der oben genannten monoethylenisch ungesättigten C₃-C₁₂ Carbonsäuren, insbesondere C₁-C₄₀, bevorzugt C₁-C₂₂, besonders bevorzugt C₂-C₁₂ Ester, Amide oder Imide. Die Substituenten können dabei auch weitere Heteroatome tragen. Dicarbonsäuren können dabei auch in Form ihrer Halbester oder Halbamide vorliegen, beispielsweise als C₁ - C₄ Halbester. Die Amide und Imide können in N-mono- oder ggf. N,N-dialkylierter Form vorliegen.

Bei Estern kann es sich insbesondere um Ester von (Meth)acrylsäure handeln, insbesondere (Meth)acrylsäureester mit aliphatischen oder cycloaliphatischen Estergruppen, insbesondere C₁-C₂₂, bevorzugt C₂-C₁₂ Estergruppen handeln. Beispiele solcher Verbindungen umfassen Methyl(meth)acrylat, Ethyl(meth)acrylat, Propyl(meth)acrylat, Isopropyl(meth)acrylate, 1-Butyl (meth)acrylate, Isobutyl(meth)acrylat, tert.-Butyl(meth)acrylat, Pentyl(meth)acrylat, Isoamyl(meth)acrylat, Hexyl(meth)acrylat, Heptyl(meth)acrylate, iso-Decyl(meth)acrylat, Lauryl(meth)acrylate, Stearyl(meth)acrylat, Behenyl(meth)acrylat, Cyclohexyl(meth)acrylat, 4-tert.-Butyl-cyclohexyl(meth)acrylat, iso-Bornyl(meth)acrylat, 2-Ethylhexyl(meth)acrylat, 2-Propylheptyl(meth)acrylat oder Citronellol(meth)acrylat.

Die Estergruppen können auch Hetereoatome, insbesondere O- und/oder N-Atome umfassen. Beispiele derartiger Ester umfassen Hydroxyethyl(meth)acrylat, Hydroxypropyl(meth)acrylat, Hydroxybutyl(meth)acrylat, Ethyldiglycol(meth)acrylat, Hydroxypropylcarbamat(meth)acrylat, Phenyl(meth)acrylat, Benzyl(meth)acrylat, 2-Phenylethyl(meth)acrylat, 3-Phenylpropyl(meth)acrylat , Ureido(meth)acrylat, Acetoacetoxyethyl(meth)acrylat, Hydroxyethylpyrrolidon(meth)acrylat, tert.-Butylaminoethyl(meth)acrylat, Diethylaminoethyl(meth)acrylat, Dimethylaminoethyl(meth)acrylat. Beispiele bevorzugter Ester von (Meth)acrylsäure umfassen Hydroxyethyl(meth)acrylat, Hydroxypropyl(meth)acrylat sowie Hydroxybutyl(meth)acrylat.

Bei den Alkoholkomponenten in den (Meth)acrylestern kann es sich auch um alkoxylierte Alkohole handeln. Zu nennen sind hier insbesondere alkoxylierte C₁-C₁₈-Alkohole, welche 2 bis 80 Mol Ethylenoxid, Propylenoxid, Butylenoxid oder Mischungen davon aufweisen. Beispiele derartiger alkoxylierter Produkte umfassen Methylpolyglykol(meth)acrylat oder (Meth)acrylsäureester von mit 3, 5, 7, 10 oder 30 Mol Ethylenoxid umgesetztem C₁₃/C₁₅-Oxoalkohol bzw. deren Mischungen.

Weitere Beispiele von Estern, Amiden oder Imiden umfassen Maleinsäuremonoethylester, Maleinsäurediethylester, Dimethylmaleat, N-substituierte Maleinimide wie N-Methyl-, N-Phenyl- und N-Cyclohexylmaleinimid, Acrylamid, Methacrylamid, N-Methyl(meth)acrylamid, N,N-Dimethyl(meth)acrylamid, N,N-Diethylacrylamid, N-isopropyl(meth)acrylamid, N-Methylol(-meth)acrylamid, N-Hydroxyethyl(meth)acrylamid, N-tert.-Butyl(meth)acrylamid, N-tert.-Octyl(meth)acrylamid, N-(1-Methylundecyl)(meth)acrylamid, 10-Acrylamidoundecansäure, N-Cyclohexyl(meth)acrylamid, Diacetonacrylamid, Dimethylaminoethyl(meth)acrylamid, Dimethylaminopropyl(meth)acrylamid, N,N-Dimethyl-N-(meth)acrylamidopropyl-N-(3-sulfopropyl)ammonium-betain, (Meth)Acryloylmorpholin.

Monomere, die Amino- oder Iminogruppen tragen können auch protoniert oder in Form ihrer quaternisierten Salze vorliegen, beispielsweise durch Quaternisierung mit Methylchlorid, Dimethylsulfat oder Diethylsulfat. Die Monomere können auch mit Propansulton zu den entsprechenden Betainen umgesetzt vorliegen.

Ebenfalls geeignete weitere Monomere sind N-Vinylgruppen enthaltende Monomere, beispielsweise N-Vinylpyrrolidon, N-Vinylcaprolactam, N-Vinyl-N-methylacetamid, N-Vinylimidazol, 2-Methyl-1-vinylimidazol, quaternisierte N-Vinylimidazolderivate, beispielsweise 1-Vinyl-3-methyl-imidazolium Chlorid oder Methosulfat, N-Vinyl-1,2,4-triazol, N-Vinylcarbazol, N-Vinylformamid, 2-Methyl-1-vinylimidazolin.

Geeignete weitere Monomere sind C₁-C₂₄ Ester von Vinylalkohol und Monocarbonsäuren, beispielsweise Vinylformiat, Vinylacetate, Vinylpropionate, Vinyl-n-butyrate, Vinyllaurate, Vinylstearate, oder Vinylester von Kochschen Säuren, beispielsweise von 2,2-Dimethylpropansäure, 2,2-Dimethylbutansäure, 2,2-Dimethylpentansäure, 2-Ethyl-2-Methylbutansäure, Neononansäure, Neodecansäure.

Weiterhin geeignet sind Vinyl- oder Allylether wie z.B. Methylvinylether, Ethylvinylether, Propylvinylether, Isobutylvinylether, tert.-Butylvinylether, 2-Ethylhexylvinylether, Vinylcyclohexylether, Vinyl-4-hydroxybutylether, Decylvinylether, Dodecylvinylether, Octadecylvinylether, Hydroxybutylvinylether, 2-(Diethylamino)ethylvinylether, 2-(Di-n-butyl-amino)ethylvinylether oder Methyldiglykolvinylether bzw. die entsprechenden Allylverbindungen.

Weiterhin geeignet sind ungesättigte Alkohole wie 3-Buten-1-ol, 2-Buten-1-ol, Allyllakohol, Isoprenol, Prenol, Methallylalkohol.

Weiterhin geeignet sind alkoxylierte Vinyl-, Allyl-, Methallyl- oder Isoprenylether mit 1-150 mol EO- Einheiten oder Gemischen von EO- und PO-Einheiten.

Geeignete weitere Monomere sind ebenfalls N-Allyl-Verbindungen, beispielsweise Diallylamin, N,N-dimethyl-N,N-diallylammonium chloride.

Geeignete weitere Monomere sind auch α,β-monoethylenisch ungesättigte Nitrile mit 3 to 10 Kohlenstoffatomen, beispielsweise Acrylnitril, Methacrylnitril, Fumanitril, Maleonitril.

Geeignete weitere Monomere sind weiterhin vinylaromatische Monomere wie Styrol, Vinyltoluol oder α-Methylstyrol. Weitere Styrolderivate genügen der allgemeinen Formel IV 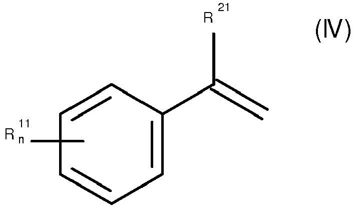 in der R¹¹ und R²¹ für Wasserstoff oder C₁-C₈-Alkyl stehen und n gleich 0, 1, 2 oder 3 ist. Der aromatische Ring kann weiterhin Heteroatome tragen beispielsweise 2- und 4-Vinylpyridin.

Geeignete weitere Monomere sind weiterhin halogenierte Alkene, beispielsweise Vinylchlorid, Vinylidenchlorid, Trifluorethylen, Tetrafluorethylen, sowie Acrolein, Methacrolein.

Bei den weiteren Monomeren kann es sich auch um vernetzend wirkende Monomere handeln. Beispiele für geeignete vernetzende weitere Monomere umfassen Moleküle mit mehreren ethylenisch ungesättigten Gruppen, beispielsweise Di(meth)acrylate wie Ethylenglykol-di(meth)acrylat, Butandiol-1,4-di(meth)acrylat oder Hexandioldi(meth)acrylat oder Poly(meth)acrylate wie Trimethylolpropantri(meth)acrylat, Pentaerythritoltri(meth)acrylat oder auch Di(meth)acrylate von Oligo- oder Polyalkylenglykolen wie Di-, Tri- oder Tetraethylen- oder -propylen-glykoldi(meth)acrylat. Weitere Beispiele umfassen Divinylbenzol, Divinylethylenharnstoff, Vinyl(meth)acrylat, Allyl(meth)acrylat, Isoprenyl(meth)acrylat, Prenyl(meth)acrylat, Dihydrodicyclopentadienylacrylat, Dicyclopentadienyl(meth)acrylat oder Butandioldivinylether. Geeignet sind ebenfalls Di- und Oligo-Allyl- oder Vinylether von Polyhydroxyverbindungen, beispielsweise Ethylenglycoldivinylether, Butandioldivinylether, 1,4-Cyclohexandimethanoldivinylether, Diethylenglycoldivinylether, Triethylenglycoldivinylether, Pentaerythrittri- oder tetraallylether. Geeignet sind ebenfalls Oligo-Allylamine, beispielsweise Triallylamin oder Tetraallylammoniumchlorid. Geeignet sind ebenfalls Di- und Oligo-Allylester von Polycarbonsäure, beispielsweise Diallylphthalat, Diallylmaleat, Triallyltrimellitat, Divinylester von Dicarbonsäuren wie der Bernsteinsäure und Adipinsäure. Geeignet sind ebenfalls Di-, Tri- oder Oligo(meth)acrylamide, beispielsweise N,N'-Methylenbis(meth)acrylamid. Der Gehalt an vernetzenden Monomeren beträgt in der Regel 0 bis 20 Mol-%, bezogen auf die Gesamtzahl aller Monomere, bevorzugt von 0,1 bis 10 Mol-% und insbesondere bevorzugt von 0,2 bis 5 Mol-%. Ganz besonders bevorzugt umfassen die erfindungsgemäßen Polymere keine vernetzenden Monomere.

Beispiele bevorzugter monoethylenisch ungesättigter weiterer Monomere umfassen Styrol, Butadien, Methyl(meth)acrylat, Ethylacrylat, Dibutylmaleat, Metyhl-alpha-cyanacrylat, Acrylnitril, Acrylsäure, Methacrylsäure, Maleinsäure(anhydrid), Itaconsäure, Vinylphosphonsäure, N-Vinylpyrrolidon, N,N-Dimetyl-N,N-diallylammoniumchlorid, Acrylamid, Vinylimidazol, , Vinylacetat, Allylsulfonsäure, 2-Acrylamido-2-methylpropan-sulfonsäure, insbesondere bevorzugt sind Acrylsäure, Methacrylsäure, Methyl(meth)acrylat, Maleinsäure(anhydrid), (Iso)prenylalkoxylat, (Meth)allylalkoxylat oder Hydroxybutylvinyletheralkoxylat. Ganz besonders bevorzugt sind Acrylsäure, Methacrylsäure, (Meth)acrylat, Maleinsäure(anhydrid), (Iso)prenylalkoxylat, (Meth)allylalkoxylat oder Hydroxybutylvinyletheralkoxylat.

In einer weiteren bevorzugten Ausführungsform der erfindungsgemäßen Polymere ist als mindestens ein weiteres von den Verbindungen der allgemeinen Formel (I) verschiedenes Monomer Acrylsäure im Polymer enthalten. Besonders bevorzugt sind in diesem Fall neben ungesättigten Verbindungen der allgemeinen Formel (I) und Acrylsäure keine weiteren Monomere enthalten.

In einer weiteren bevorzugten Ausführungsform der erfindungsgemäßen Polymere ist als mindestens ein weiteres von den Verbindungen der allgemeinen Formel (I) verschiedenes Monomer Methacrylsäure im Polymer enthalten. Besonders bevorzugt sind in diesem Fall neben ungesättigten Verbindungen der allgemeinen Formel (I) und Methacrylsäure keine weiteren Monomere enthalten. Die erfindungsgemäßen Verbindungen der allgemeinen Formel (I) lassen sich im Gegensatz zu den entsprechenden Vinyletherverbindungen gut mit (Meth)acrylsäure und Derivaten davon copolymerisieren.

In einer weiteren bevorzugten Ausführungsform der erfindungsgemäßen Polymere ist als mindestens ein weiteres von den Verbindungen der allgemeinen Formel (I) verschiedenes Monomer Maleinsäure(anhydrid) im Polymer enthalten. Besonders bevorzugt sind in diesem Fall neben ungesättigten Verbindungen der allgemeinen Formel (I) und Maleinsäure(anhydrid) keine weiteren Monomere enthalten.

Die erfindungsgemäßen Polymere können, selbst wenn sie nur aus bestimmten Verbindungen der allgemeinen Formel (I) als Monomere und/oder weiteren von den Verbindungen der allgemeinen Formel (I) verschiedenes Monomeren hergestellt werden, dennoch auf Grund ihrer Herstellungsweise selbstverständlich geringe Mengen an Startern oder Reglern enthalten.

In weiteren bevorzugten Ausführungsformen der erfindungsgemäßen Polymere sind neben ungesättigten Verbindungen der allgemeinen Formel (I), Acrylsäure und Methacrylsäure oder Acrylsäure und Maleinsäure(anhydrid) oder Methacrylsäure und Maleinsäure(anhydrid) keine weiteren Monomere enthalten.

In einer weiteren bevorzugten Ausführungsform der erfindungsgemäßen Polymere sind neben ungesättigten Verbindungen der allgemeinen Formel (I), Acrylsäure, Methacrylsäure und Maleinsäure(anhydrid) keine weiteren Monomere enthalten.

In der Regel umfassen die erfindungsgemäßen Polymere 5 bis 99,9 Gew.-% ungesättigte Verbindungen der allgemeinen Formel (I), insbesondere 8 bis 99,9 Gew.-% bevorzugt 10 bis 99,9 Gew.-%, insbesondere bevorzugt 30 bis 99,5 Gew.-%, besonders bevorzugt 50 bis 99 Gew.-% und ganz besonders bevorzugt 55 bis 96 Gew.-%, jeweils bezogen auf die Gesamtmenge an Monomeren im Polymer.

In einer bevorzugten Ausführungsform der Erfindung umfassen die erfindungsgemäßen Polymere von 5 bis 99,9 Gew.-% ungesättigte Verbindungen der allgemeinen Formel (I), bevorzugt Verbindungen (la), besonders bevorzugt Verbindungen (Ib) sowie 95 bis 0,1 Gew.-% von monoethylenisch ungesättigten weiteren Monomeren, bevorzugt 10 bis 99,9 Gew.-% Verbindungen (I) sowie 90 bis 0,1 Gew.-% von monoethylenisch ungesättigten weiteren Monomeren, besonders bevorzugt von 30 bis 99,9 Gew.-% Verbindungen (I) sowie 70 bis 0,1 Gew.-% von monoethylenisch ungesättigten weiteren Monomeren, jeweils bezogen auf die Gesamtmenge an Monomeren enthalten, mit der Maßgabe, dass die Gesamtmenge an Verbindungen der Formel (I) sowie monoethylenisch ungesättigten weiteren Monomeren insbesondere mindestens 80 Gew.-%, bevorzugt mindestens 90 Gew.-%, besonders bevorzugt mindestens 95 Gew.-% beträgt. Ganz besonders bevorzugt sind neben Verbindungen der Formel (I) sowie monoethylenisch ungesättigten weiteren Monomeren keine anderen Monomere enthalten.

In einer weiteren bevorzugten Ausführungsform umfassen die erfindungsgemäßen Polymere von 1 bis 99,9 Gew.-%, bevorzugt von 10 bis 99,9 Gew.-%, besonders bevorzugt von 30 bis 99,9 Gew.-% ungesättigte Verbindungen der allgemeinen Formel (I), bevorzugt Verbindungen (la), besonders bevorzugt Verbindungen (Ib) und insgesamt von 99 bis 0,1 Gew.-%, bevorzugt von 90 bis 0,1 Gew.-%, besonders bevorzugt 70 bis 0,1 Gew.-% weitere Monomere, wobei die genannten Mengen jeweils auf die Gesamtmenge an Monomeren im Polymer bezogen sind, und wobei es sich bei den weiteren Monomeren um mindestens eines ausgewählt aus der Gruppe von
(1) monoethylenisch ungesättigten, Carbonsäuregruppen umfassenden Monomeren bzw. deren Anhydride oder Salze, wie beispielsweise Acrylsäure, Methacrylsäure, Maleinsäure oder Maleinsäureanhydrid,
(2) monoethylenisch ungesättigten, Phosphor oder Phosphonsäuregruppen umfassenden Monomeren bzw. deren Salze, wie beispielsweise Ester von Hydroxyethyl, Hydroxypropyl- oder Hydroxybutyl(meth)acrylat mit (Poly)phosphorsäure,
(3) monoethylenisch ungesättigten, Sulfonsäuregruppen umfassenden Monomeren bzw. deren Salze, wie beispielsweise Vinylsulfonsäure oder 2-Acrylamido-2-methylpropanesulfonsäure,
(4) (Meth)acrylsäurehydroxyalkylestern, wie beispielsweise Hydroxyethylacrylat oder Hydroxypropylactylat,
(5) Polyalkoxygruppen umfassende, monoethylenisch ungesättigte Monomere, wie beispielsweise (Iso)prenylalkoxylat, (Meth)allylalkoxylat, Hydroxybutylvinyletheralkoxylat oder (Meth)acrylsäurealkoxylate
   handelt.

In einer weiteren bevorzugten Ausführungsform umfasst das erfindungsgemäße Polymer neben mindestens einer Verbindung (I), bevorzugt (la), besonders bevorzugt (Ib) mindestens zwei verschiedene weitere Monomere, insbesondere mindestens zwei verschiedene weitere monoethylenisch ungesättigte Monomere. Bevorzugt handelt es sich bei den weiteren Monomeren um mindestens ein Säuregruppen umfassendes, monoethylenisch ungesättigtes Monomer, bevorzugt ein Monomer ausgewählt aus den oben beschriebenen Gruppen (1), (2) und (3) sowie ein OH-Gruppen und/oder Polyalkoxygruppen umfassendes monoethylenisch ungesättigtes Monomer, bevorzugt ein Monomer ausgewählt aus den oben beschriebenen Gruppen (4) und (5).
In dieser bevorzugten Ausführungsform beträgt die Menge der Verbindungen (I), bevorzugt Verbindungen (la), besonders bevorzugt Verbindungen (Ib) in der Regel 1 bis 99,9 Gew.-%, bevorzugt von 10 bis 99,9 Gew.-%, besonders bevorzugt von 30 bis 99,9 Gew.-% und die Menge der beiden weiteren Monomere zusammen 99 bis 0,1 Gew.-%, bevorzugt von 90 bis 0,1 Gew.-%, besonders bevorzugt 70 bis 0,1 Gew.-%, jeweils bezogen auf die Gesamtmenge aller Monomere im Polymer.

In einer bevorzugten Ausführungsform der Erfindung umfasst das erfindungsgemäße Polymer 70 bis 99 Gew.-%, bevorzugt 80 bis 98 Gew.-% mindestens einer Verbindung (Ib) sowie 1 bis 30 Gew.-%, bevorzugt 2 bis 20 Gew.-% (Meth)acrylsäure.

Die erfindungsgemäßen Polymere weisen, abhängig von dem Einsatzzweck der erfindungsgemäßen Zusammensetzung, Molmassenverteilungen auf, die über einen weiten Bereich variieren können. Der Fachmann wählt je nach dem gewünschten Anwendungszweck des Polymers eine geeignete Molmasse. Die zahlenmittlere Molmasse Mₙ kann beispielsweise 1000 g/mol bis 1000000 g/mol betragen.

Insbesondere weisen die erfindungsgemäßen Polymere eine Molmassenverteilung (Molekulargewichtsverteilung) mit einem Zahlenmittel Mₙ von 1000 bis 200000 g/mol auf, bevorzugt von 2000 bis 180000 g/mol, besonders bevorzugt von 3000 bis 150000 g/mol, insbesondere von 5000 bis 100000 g/mol und beispielsweise 10000 g/mol bis 50000 g/mol. Die Molmassenverteilung wird über GPC bestimmt.

Die Herstellung der Polymere kann insbesondere mittels radikalischer Polymerisation ungesättigten Verbindungen der allgemeinen Formel (I), bevorzugt (la), besonders bevorzugt (Ib) sowie optional weiteren Monomeren erfolgen. Verfahren zur radikalischen Polymerisation von Monomeren sind dem Fachmann prinzipiell bekannt.

Die radikalische Polymerisation kann in Masse oder bevorzugt in Lösung erfolgen. Bei der Polymerisation in Lösung richtet sich die Wahl des Lösemittels nach der Art der ungesättigten Verbindungen (I) sowie optional weiterer Monomere, insbesondere nach der Hydrophilie der Monomere. Die Polymerisation kann insbesondere in polaren Lösemitteln, bevorzugt in wässriger Lösung erfolgen. Bevorzugt können wässrige Lösungen eingesetzt werden, bei denen das verwendete Lösungsmittel bzw. Lösemittelgemisch mindestens 50 Gew.-% Wasser umfasst. Daneben können weitere, mit Wasser mischbare Lösemittel vorhanden sein, z.B. Alkohole. Bevorzugt umfasst ein wässriges Lösemittel mindestens 70 Gew.-% Wasser, besonders bevorzugt mindestens 90 Gew.-% Wasser. Beispielsweise kann ausschließlich in Wasser gearbeitet werden.

Zum Starten der Polymerisation werden in prinzipiell bekannter Art und Weise Initiatoren für die radikalische Polymerisation verwendet. Hierbei kann es sich insbesondere um thermische Polymerisationsinitiatoren handeln, beispielsweise Peroxide oder Azoinitiatoren. Die Polymerisationstemperatur wird vom Fachmann je nach dem gewünschten Ergebnis gewählt. Bewährt hat sich eine Temperatur von 50°C bis 100°C, insbesondere bei der Polymerisation in wässriger Lösung. Die radikalische Polymerisation kann aber auch mittels anderer Techniken vorgenommen werden; es kann sich beispielsweise um eine Fotopolymerisation unter Verwendung Fotoinitiatoren handeln.

Der pH-Wert im Zuge der Polymerisation in wässriger Lösung kann vom Fachmann je nach dem gewünschten Ergebnis gewählt werden. Die erfindungsgemäßen Verbindungen (I) sind auch im sauren Bereich hydrolysestabil. Dies unterscheidet sie von den analogen, im Stand der Technik bekannten Vinyletherverbindungen H₂C=CH-O-R-(AO)ₓ, welche im sauren Bereich, insbesondere bei pH-Werten unterhalb von 3 zu Hydrolyse neigen. Dies verringert ihre Einsatzmöglichkeiten deutlich. Besonders vorteilhaft können die erfindungsgemäßen Monomere (I), optional zusammen mit weiteren Monomeren radikalisch in wässriger Lösung im sauren pH-Bereich polymerisiert werden, insbesondere bei pH 1 bis 6, bevorzugt 1 bis 5 und insbesondere pH 1 bis 3.

Die radikalische Polymerisation kann beispielsweise im Batch-Verfahren, Semi-Batch-Verfahren oder mittels eines kontinuierlichen Verfahrens durchgeführt werden. Ein geeignetes kontinuierliches Verfahren ist beispielsweise in der WO 2009/100956 A2 beschrieben.

Bei der radikalischen Polymerisation von ungesättigten Verbindungen (I), bevorzugt Verbindungen (la), besonders bevorzugt Verbindungen (Ib) mit weiteren Monomeren, insbesondere mit Säuregruppen umfassenden weiteren Monomeren wie beispielsweise Acrylsäure in wässriger Lösung können verschiedene Techniken eingesetzt werden.

In einer Ausführungsform der Erfindung legt man eine Mischung der Monomere, als solche oder in Lösung im Reaktionsgefäß vor und startet danach die Polymerisation, beispielsweise durch Zugabe eines thermischen Polymerisationsinitiators und Erhöhung der Temperatur.
In einer weiteren Ausführungsform der Erfindung legt man eine Lösung der ungesättigten Verbindungen (I), sowie optional einen Teil der weiteren Monomere und einen Teil eines thermischen Polymerisationsinitiators im Reaktionsgefäß vor. Es sollten bei dieser Ausführungsform nicht mehr als 25 Gew.-% der weiteren Monomere vorgelegt werden. Die verbliebene Menge weiterer Monomere sowie die verbliebene Menge des Initiators werden nach dem Start der Polymerisation, insbesondere nach Erwärmen auf Polymerisationstemperatur zugegeben. Bevorzugt werden hierbei eine Lösung weiterer Monomere und eine Lösung des Initiators kontinuierlich in das Reaktionsgefäß eindosiert.

In einer bevorzugten Ausführungsform der Erfindung dosiert man die ungesättigten Verbindungen (I) sowie die weiteren Monomere nach und nach in den Polymerisationsreaktor ein, welcher mindestens eine gewisse Menge Lösungsmittel, insbesondere ein wässriges Lösemittel enthält.
Bei dieser Ausführungsform werden nur ein Teil der ungesättigten Verbindungen (I), der weiteren Monomere sowie des Initiators im Reaktionsgefäß vorgelegt, wobei die Menge der vorgelegten Monomere 25 Gew.-% der Gesamtmenge, bevorzugt 10 Gew.-% der vorgesehenen Gesamtmenge der Monomere nicht überschreiten sollte, und wobei weiterhin das Molverhältnis der vorgelegten Monomere entsprechend dem im Polymer vorgesehenen Verhältnis gewählt werden sollte. Die Abweichung sollte in der Regel nicht mehr als +/- 20 %, bevorzugt nicht mehr als +/- 10 % des vorgesehenen Verhältnis betragen. Besonders bevorzugt entspricht das Verhältnis vorgelegter Monomere dem gewünschten Monomerenverhältnis.

Die Polymerisation der vorgelegten Anteile der Monomere wird zunächst gestartet. Dies kann erfolgen, indem man den Ansatz auf die gewünschte Polymerisationstemperatur erwärmt. Alternativ kann man einen Initiator zusetzen, der die Polymerisation schon bei Raumtemperatur startet, z.B. einen Redox-Initiator. Die Polymerisation startet dann, wenn der Initiator zu den Monomeren zugegeben wird. Nach dem Start werden die die ungesättigten Verbindungen (I) und die weiteren Monomere zudosiert, bevorzugt als Lösungen. Die Monomere können hierbei separat zudosiert werden, oder man kann auch eine Mischungen aus ungesättigten Verbindungen (I) sowie weiteren Monomeren, bevorzugt eine Lösung von ungesättigten Verbindungen (I) sowie weiteren Monomeren in einem geeigneten Lösemittel zudosieren. In letzterem Falle ist das Verhältnis der ungesättigten Verbindungen (I) zu den weiteren Monomeren naturgemäß festgelegt, während im ersteren Falle das Verhältnis während der Polymerisation auch variiert werden kann. Der Initiator wird ebenfalls als Lösung in einem geeigneten Lösemittel eindosiert.

Die Dosiergeschwindigkeit bei der Zugabe der ungesättigten Verbindungen (I) sowie der weiteren Monomere sollte hierbei jeweils so gewählt werden, dass ein zu großer Überschuss nicht polymerisierter ungesättigter Verbindungen (I) bzw. nicht polymerisierter weiterer Monomere im Reaktionsgefäß vermieden wird. Insbesondere sollte ein Überschuss nicht polymerisierter ungesättigter Verbindungen (I) vermieden werden. Das Molverhältnis von ungesättigten Verbindungen (I) / weiteren Monomeren soll nachfolgend als x bezeichnet werden. Die Dosiergeschwindigkeiten der Monomere sollten bevorzugt so gewählt werden, dass das Molverhältnis der in den Reaktor einlaufenden Monomere um nicht mehr als +/- 20 %, bevorzugt nicht mehr als +/- 10 % des vorgesehenen Verhältnis abweicht, wobei selbstverständlich die Gesamtmenge der Monomere dem gewünschten Wert entsprechen muss.

Die beschriebene Ausführungsform der Polymerisation führt zu Copolymeren mit besonders guten anwendungstechnischen Eigenschaften. Die Vorteile sind besonders deutlich bei der Copolymerisation von ungesättigten Verbindungen (I) mit weiteren Säuregruppen aufweisenden weiteren Monomeren in wässriger Lösung, wie beispielsweise Acrylsäure. Ohne sich auf eine bestimmte Theorie festzulegen, scheint der Effekt darauf zurückzuführen zu sein, dass bei der bevorzugten Ausführungsform die Monomere besonders gleichmäßig eingebaut werden.

Ein geeignetes Verfahren zur Herstellung der Polymere umfasst die Schritte :
a. radikalische Polymerisation von Monomeren enthaltend ungesättigte Verbindungen der allgemeinen Formel (II) und 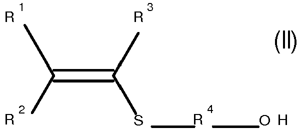
b. polymeranaloge Umsetzung eines in Schritt a. entstandenen Polymeren mit Verbindungen der allgemeinen Formel (III) 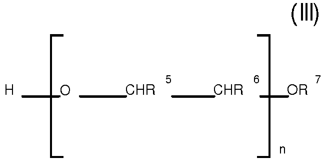 , wobei die Symbole und Indices die oben angegebenen Bedeutungen haben.

Bei dem erfindungsgemäßen Bindemittel auf Basis von Calciumsulfat handelt es sich bevorzugt um α-Halbhydrat, α/β-Halbhydrat, β-Halbhydrat, natürliches Anhydrit, synthetisches Anhydrit, aus der Rauchgasentschwefelung erhaltenes Anhydrit, und/oder Mischungen von zwei oder mehreren davon.

In einer bevorzugten Ausführungsform umfasst die erfindungsgemäße Zusammensetzung, bezogen auf die Trockenmasse, mindestens 10 Gew.-%, bevorzugt mindestens 15 Gew.-%, insbesondere mindestens 20 Gew.-% A), des mindestens einen Bindemittels auf Basis von Calciumsulfat und zwischen 0,005 und 5 Gew.-%, bevorzugt zwischen 0,005 und 3 Gew.-% und insbesondere zwischen 0,01 und 1 Gew.-% B), des mindestens einen Polymers.

Das in Kontakt bringen des mindestens einen Bindemittels auf Basis von Calciumsulfat und des mindestens einen Polymers kann auf jede dem Fachmann bekannte Weise geschehen. Beispielsweise kann das erfindungsgemäße Polymer dem Anmachwasser zugegeben werden, welches anschließend dem mindestens einen Bindemittel auf Basis von Calciumsulfat zugegeben wird. Es ist aber auch möglich die Komponenten in Pulverform miteinander zu vermischen, wenn sowohl das Bindemittels auf Basis von Calciumsulfat als auch das erfindungsgemäße Polymer als Pulver vorliegen. Weiterhin ist es aber auch möglich, das Polymer in flüssiger Form, beispielsweise in einem organischen Lösungsmittel wie Methylpolyethylenglycol, auf das mindestens eine Bindemittel auf Basis von Calciumsulfat, welches in Pulverform vorliegt, aufzusprühen.

Die natürliche kristallwasserfreie Form von Calciumsulfat ist vom Ausdruck "Anhydrit" umfasst. Neben den natürlichen Erscheinungsformen stellt Calciumsulfat ein typisches Nebenprodukt technischer Prozesse dar, worunter dann "synthetischer Gips" verstanden wird. Ein typisches Beispiel für einen synthetischen Gips aus technischen Prozessen ist die Abgasentschwefelung. Synthetischer Gips kann aber auch gleichermaßen das Nebenprodukt von Phosphorsäure- oder Flusssäure-Herstellungsverfahren entstehen, wobei in diesen Fällen Halbhydratformen wie z. B. CaSO₄ x 1/2 H₂O ("Halbhydrat") gebildet wird. Typischer Gips (CaSO₄ x 2H₂O) kann calziniert werden, indem das Kristallwasser abgetrennt wird. Produkte der unterschiedlichsten Calzinierungsverfahren sind α- oder β-Halbhydrat. β-Halbhydrat resultiert aus einer raschen Erhitzung in offenen Gefäßen, bei einer gleichzeitig schnellen Verdampfung von Wasser unter Bildung von Hohlräumen. α-Halbhydrat wird hergestellt durch die Entwässerung von Gips in geschlossen Autoklaven. Die Kristallform in diesem Fall ist relativ dicht, weshalb dieses Bindemittel weniger Wasser zur Verflüssigung benötigt als β-Halbhydrat. Auf der anderen Seite rehydriert Halbhydrat mit Wasser zu Dihydrat-Kristallen. Üblicherweise ist für die vollständige Hydratation von Gips ein Zeitbedarf von einigen Minuten bis Stunden notwendig, woraus eine verkürzte Verarbeitungszeit im Vergleich zu Zementen resultiert, die zur vollständigen Hydratation mehrere Stunden bis Tage benötigen. Außerdem zeigen ausgehärtete Gipsprodukte eine ausgeprägte Härte und Druckfestigkeit.

Erfindungsgemäß bevorzugt kann es sich bei dem erfindungsgemäßen Bindemittel auf Basis von Calciumsulfat um β-Halbhydrat handeln, weil dieser gut verfügbar ist, und unter wirtschaftlichen Gesichtspunkten zahlreiche Vorteile zeigt. Allerdings werden diese Vorteile dadurch zum Teil wieder aufgehoben, dass β-Halbhydrat bei der Verarbeitung einen höheren Wasserbedarf hat, um überhaupt fließfähige Slurrys zu erzielen. Zudem neigen die hieraus hergestellten getrockneten Gipsprodukte zu einer gewissen Schwäche, welche auf Restwassermengen zurückzuführen sind, die in der Kristallmatrix beim Aushärten verblieben sind. Aus diesem Grund zeigen entsprechende Produkte eine geringere Härte als Gipsprodukte, die mit geringeren Mengen an Anmachwasser zubereitet worden sind.

Besonders bevorzugt handelt es sich deshalb im Sinne der vorliegenden Erfindung bei Gips um β-Calciumsulfathalbhydrat. Erfindungsgemäße Zusammensetzungen umfassend β-Calciumsulfathalbhydrat ist hierbei insbesondere zur Verwendung in gipsbasierten Fließestrich geeignet. Gipsbasierte Fließestriche werden bislang bevorzugt mit Bindemitteln auf Basis von Anhydrit oder α-Halbhydrat hergestellt. Bei dieser Art von Bindemitteln handelt es sich um Modifikationen des Gipses, die einen sehr niedrigen Wasseranspruch aufweisen und damit hochfeste Binder sind. Allerdings weisen beide Komponenten sowohl preislich als auch in ihrer Verfügbarkeit deutliche Nachteile gegenüber β-Halbhydrat auf. Die Verwendung von β-Halbhydrat dagegen ist nach dem Stand der Technik nur bedingt möglich, da aufgrund des hohen Wasseranspruchs die daraus resultierenden Festigkeiten in der Regel zu gering sind, um einen Fließestrich in ausreichender Qualität zu produzieren.

Überraschend hat sich gezeigt, dass die erfindungsgemäße Zusammensetzung sich als maschinenapplizierbarer gipsbasierter Fließestriche eignet. Insbesondere kann es sich hierbei bei dem Bindemittel auf Basis von Calciumsulfat um β-Calciumsulfathalbhydrat handeln, wobei sich diese erfindungsgemäße Zusammensetzung wie die im Stand der Technik bekannten gipsbasierten Fließestriche auf Basis von Anhydrit oder α-Halbhydrat verarbeiten lässt und hierbei eine vergleichbare oder sogar bessere mechanische Festigkeit, Beständigkeit und Dauerhaftigkeit aufweist.

Ein weiterer Gegenstand der vorliegenden Erfindung sind somit Formkörper, hergestellt durch Abbinden einer erfindungsgemäßen Zusammensetzung. Insbesondere bevorzugt handelt es sich bei dem Formkörper um eine Gipskartonplatte, eine Gipswandbauplatte, einen Estrich oder eine Spachtelmasse.

In einer weiteren Ausführungsform sieht die vorliegende Erfindung eine Zusammensetzung vor, welche dadurch hergestellt werden kann, dass eine wasserlösliche Calciumverbindung, mit einer wasserlöslichen Sulfatverbindung, in Gegenwart von Wasser und dem erfindungsgemäßen Polymer, erhältlich durch Polymerisation von Monomeren, umfassend eine ungesättigte Verbindungen der allgemeinen Formel (I), umgesetzt wird und dieses Umsetzungsprodukt im Anschluss mit einem Bindemittel auf Basis von Calciumsulfat in Kontakt gebracht wird.

Als wasserlösliche Calciumverbindungen und wasserlösliche Sulfatverbindung kommen jeweils prinzipiell auch nur verhältnismäßig schwach in Wasser lösliche Verbindungen in Frage, obwohl gut wasserlösliche Verbindungen, welche sich vollständig oder nahezu vollständig in Wasser lösen jeweils bevorzugt sind. Es muss jedoch gewährleistet sein, dass in wässriger Umgebung mit dem entsprechenden Reaktionspartner, also der wasserlöslichen Calciumverbindung und der wasserlöslichen Sulfatverbindungen, eine für die Umsetzung ausreichende Reaktivität vorliegt.

In einer bevorzugten Ausführungsform wird in einem ersten Schritt die wasserlösliche Sulfatverbindung mit Wasser und dem erfindungsgemäßen Polymer vermischt, so dass ein bevorzugt als Lösung vorliegendes Gemisch erhalten wird, zu welchem in einem sich anschließenden zweiten Schritt die wasserlösliche Calciumverbindung, bevorzugt als Lösung, hinzu gegeben wird. Insbesondere kann die wasserlösliche Calciumverbindung und die wasserlösliche Sulfatverbindung als wässrige Lösungen in folgenden Konzentrationen eingesetzt werden:
i) 0,1 bis 6 mol/l, bevorzugt 0,5 bis 2 mol/l, insbesondere 0,6 bis 1 mol/l der Sulfatverbindung,
ii) 0,1 bis 10 mol/l, bevorzugt 3 bis 8 mol/l, insbesondere 4 bis 6 mol/l der Calciumverbindung.

Die wässrige Mischung kann neben Wasser noch ein oder mehrere weitere Lösungsmittel enthalten. Bevorzugt wird die Umsetzung der wasserlöslichen Calciumverbindung mit der wasserlöslichen Sulfatverbindung, in Gegenwart von Wasser und dem erfindungsgemäßen Polymer bei einer Temperatur zwischen 5 und 25°C durchgeführt.

Bei der wasserlöslichen Calciumverbindung handelt es sich insbesondere um mindestens eine aus der Reihe Calciumchlorid, Calciumnitrat, Calciumformiat, Calciumacetat, Calciumbicarbonat, Calciumbromid, Calciumcarbonat, Calciumcitrat, Calciumchlorat, Calciumfluorid, Calciumgluconat, Calciumhydroxid, Calciumhypochlorid, Calciumiodat, Calciumiodid, Calciumlactat, Calciumnitrit, Calciumoxalat, Calciumphosphat, Calciumpropionat, Calciumsulfid, Calciumtartrat, Calciumthiocyanat und Calciumaluminat.

Bevorzugt handelt es sich bei der wasserlöslichen Calciumverbindung um mindestens eine aus der Reihe Calciumchlorid, Calciumnitrat, Calciumthiocyanat, Calciumacetat und Calciumformiat.

Bei der wasserlöslichen Sulfatverbindung handelt es sich insbesondere um mindestens eine aus der Reihe Ammoniumsulfat, Magnesiumsulfat, Natriumsulfat, Kaliumsulfat, Lithiumsulfat, Rubidiumsulfat, Cäsiumsulfat, Natriumhydrogensulfat, Kaliumhydrogensulfat, Lithiumhydrogensulfat, Rubidiumhydrogensulfat, Cäsiumhydrogensulfat und Schwefelsäure.

Bevorzugt handelt es sich bei der wasserlöslichen Sulfatverbindung um mindestens eine aus der Reihe Ammoniumsulfat, Magnesiumsulfat, Natriumsulfat, Kaliumsulfat, Lithiumsulfat, Rubidiumsulfat und Cäsiumsulfat.

Die Erfindung wird durch die Beispiele näher erläutert ohne dass die Beispiele den Gegenstand der Erfindung einschränken.

### Beispiele

### Übersicht

**Tabelle 1**

| | **Seitenketten-Typ** | **Ladung** | **Seitenkette: Ladung** |
|---|---|---|---|
| Beispiel 1 | VME-135 EO | HEMA-P | 1 : 4,5 |
| Beispiel 2 | VME-135 EO | Acrylsäure | 1 : 4,5 |
| Vergleichsbeispiel 1 | VOB-135 EO | HEMA-P | 1 : 4,5 |
| Vergleichsbeispiel 2 | VOB-135 EO | HEA-P | 1 : 5.0 |

| | | | |
|---|---|---|---|
| VME-135 EO: H₂C=CH-S-CH₂CH₂-(O-CH₂CH₂)₁₃₅OH VOB-135 EO: H₂C=CH-O-CH₂CH₂CH₂CH₂-(O-CH₂CH₂)₁₃₅OH HEMA-P: Hydroxyethylmethacrylatphosphat HEA-P: 2-Hydroxyethylacrylatphosphat | | | |

### Gelpermeationschromatographie (GPC)

Die Probenpräparation für die Molgewichtsbestimmung erfolgte durch Lösen von Copolymerlösung im GPC Eluent, so dass die Polymerkonzentration im GPC-Eluent 0,5 Gew.-% beträgt. Danach wurde diese Lösung über einen Spritzenvorsatzfilter mit Polyethersulfonmembran und Porengröße 0,45 µm filtriert. Das Injektionsvolumen dieses Filtrat betrug 50 - 100 µl.
Die Bestimmung der mittleren Molekulargewichte erfolgte auf einem GPC Gerät der Firma Waters mit dem Typnamen Alliance 2690 mit UV-Detektor (Waters 2487) und RI-Detektor (Waters 2410).

| | |
|---|---|
| Säulen: | Shodex SB-G Guard Column for SB-800 HQ series Shodex OHpak SB 804HQ and 802.5HQ (PHM gel, 8 x 300 mm, pH 4,0 bis 7,5) |
| Eluent: | 0,05 M wässrige Ammoniumformiat / Methanol-Mischung = 80:20 (Volumenteile) |
| Flußrate: | 0,5 ml/min |
| Temperatur: | 50° C |
| Injektion: | 50 bis 100 µl |
| Detektion: | RI und UV |

Die Molekulargewichte der Copolymere wurden relativ zu Polyethylenglykolstandards der Firma PSS Polymer Standards Service GmbH bestimmt. Die Molekulargewichtsverteilungskurven der Polyethylenglykolstandards wurden mittels Lichtstreuung bestimmt. Die Massen der Polyethylenglykolstandards betrugen 682 000, 164 000, 114 000, 57 100, 40 000, 26 100, 22 100, 12 300, 6 240, 3 120, 2 010, 970, 430, 194, 106 g/mol.

### Synthese der erfindungsgemäßen Dispergiermittel

### Synthese des erfindungsgemäßen Monomers (VME-135 EO):

Reaktionsschema zur Herstellung von VME-135 EO: 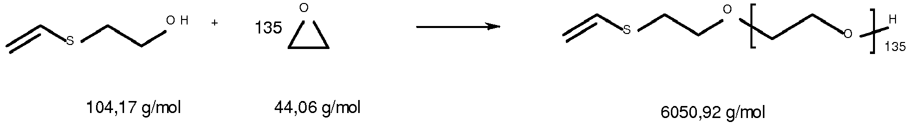 23,4 g (224 mmol) Vinylmercaptoethanol und 120 mg (1,71 mmol) Kaliummethanolat wurden in 50 ml Toluol bei 60 °C in einem 2 Liter Autoklaven vorgelegt und mit Stickstoff geflutet. Die Temperatur wurde anschließend auf 120 °C erhöht. 1332 g (30,2 mol) Ethylenoxid wurden innerhalb von 36 h zugegeben. Das erhaltene Reaktionsgemisch wurde 12 h bei 120 °C nachgerührt und nach Abkühlen auf 100 °C am Vakuum von flüchtigen Bestandteilen befreit. Es wurden 1388 g eines hellbraunen Feststoffes erhalten.
OHZ = 12,1 mg KOH/g (Theorie 9,3 mg KOH/g), PEG-Gehalt: 2,0 Gew%

### Beispiel 1

### Copolymer aus 84 Gew.-% VME-135 EO und 16 Gew.-% HEMA-P

Die Versuchsapparatur besteht aus 1000 ml Doppelwandreaktor, Thermostat, Rührmotor mit Flügelrührer, Temperaturfühler, pH-Sonde und N₂-Zuleitung. In den Reaktor werden 172,80 g Wasser und 106,38 g VME-135 EO gegeben. Anschließend wird N₂ eingeleitet und der Sauerstoff verdrängt. Der Thermostat wird auf T = 75°C gestellt und der Reaktorinhalt aufgeheizt.
Bei ca. 60°C erfolgt die Zugabe von 19,79 g HEMA-P in 104,6 g Wasser. Es stellt sich ein pH-Wert von ca. 1,0 -1,5 ein. Danach werden 7,05 g 50%ige NaOH dazugegeben um einen pH Wert von ca. 3 einzustellen. Bei der Zugabe der HEMA-P-Lösung fällt die Temperatur bis auf 50°C. Anschließend wird der Reaktorinhalt auf 60°C aufgeheizt. Daraufhin werden 1,26 g Wako VA-044 (2,2'-Azobis[2-(2-imidazolin-2-yl)propan]dihydrochlorid) in 11,3 g Wasser hinzugefügt. Nach 3 h Reaktionszeit wird der Reaktorinhalt auf 25°C abgekühlt.
Das entstandene gelbliche leicht trübe Produkt hat einen pH Wert von ca. 2,5 und einen Feststoffgehalt von 33 Gew.-%. Die mittlere Molmasse des Polymers (Mw) beträgt 29.000 g/mol. Die Polydispersität 1,35.
Die Ergebnisse sind in Tabelle 2 zusammengefasst.

**Tabelle 2: Übersicht der analytischen Daten**

| Beispiel | Mw g/mol | Feststoff | PD |
|---|---|---|---|
| 1 | 29000 | 33 | 1,35 |

### Beispiel 2

### Copolymer aus 94,9 Gew.-% VME-135 EO und 5,1 Gew.-% Acrylsäure

Die Versuchsapparatur besteht aus 1000 ml Doppelwandreaktor, Thermostat, Rührmotor mit Flügelrührer, Temperaturfühler, pH-Sonde und N₂-Zuleitung. In den Reaktor werden 172,80 g Wasser und 106,38 g VME-135 EO gegeben. Anschließend wird N₂ eingeleitet und der Sauerstoff verdrängt. Der Thermostat wird auf T = 40°C gestellt und der Reaktorinhalt aufgeheizt.
Es werden eine Lösung 1 bestehend aus 5,78 g Acrylsäure (99,5 %ig) und 30,36 g Wasser und eine Lösung 2 bestehend aus 1,12 g Wako VA-044 (2,2'-Azobis[2-(2-imidazolin-2-yl)propan]dihydrochlorid) in 10,09 g Wasser hergestellt.

Bei ca. 30°C erfolgt die Zugabe von 1,8 ml der Lösung 1 und 0,06 g 3-Mercaptopropionsäure (99 %ig). Es stellt sich ein pH-Wert von ca. 4,0 ein.
Zur verbleibenden Lösung 1 werden 0,57 g 3-Mercaptopropionsäure gegeben.
Zugabe von 0,6 ml der Lösung 2 in den Reaktor.
Der Thermostat wird auf T = 78°C gestellt, anschließend wird der Reaktorinhalt auf ca. 60°C aufgeheizt.
Bei ca. 60°C und einem pH-Wert von ca. 4,0 startet die Zugabe der restlichen Lösung 1 über 180 Minuten mit einer Geschwindigkeit von 11,5 ml/h und der restlichen Lösung 2 über 240 min in mit einer Geschwindigkeit von 2,7 ml/h. 10 Minuten nach dem Start der Zugabe (T innen ca. 65°C) wird der Thermostat auf 70°C gestellt.
Im Anschluss wird nochmal 120 Minuten zur Nachreaktion gerührt und dann der Reaktorinhalt auf 25°C abgekühlt. Der pH-Wert von ca. 3,0 wird mit 6,66 g NaOH (50 %ig) auf ca. 8,4 gestellt.

Das entstandene gelbliche leicht trübe Produkt hat einen pH Wert von ca. 8,4 und einen Feststoffgehalt von 37 Gew.-%. Die mittlere Molmasse des Polymers (Mw) beträgt 50.000 g/mol. Die Polydispersität 1,33.
Die Ergebnisse sind in Tabelle 3 zusammengefasst.

**Tabelle 3: Übersicht der analytischen Daten**

| Beispiel | Mw g/mol | Feststoff | PD |
|---|---|---|---|
| 2 | 50000 | 37 | 1,33 |

### Vergleichsbeispiel 1:

Die Versuchsapparatur besteht aus 1000 ml Doppelwandreaktor, Thermostat, Rührmotor mit Flügelrührer, Temperatur-, pH-Sonde und N₂-Zuleitung.
In den Reaktor werden 170,0 g Wasser und 202,12 g VOB-135 EO gegeben. Anschließend wird N₂ eingeleitet und der Sauerstoff verdrängt. Der Thermostat wird auf T = 40°C gestellt und der Reaktorinhalt aufgeheizt.
Bei ca. 35°C erfolgt die Zugabe von 37,59 g HEMA-P (99,99 %ig) in 87,72 g Wasser. Es stellt sich ein pH-Wert von ca.1,5 ein. Danach werden 10,20 g (50 %ig) NaOH dazugegeben um einen pH Wert von ca. 3 einzustellen. Der Thermostat wird auf T = 75°C gestellt und der Reaktorinhalt weiter aufgeheizt. Bei ca. 65 °C werden 2,40 g Wako VA-044 (2,2'-Azobis[2-(2-imidazolin-2-yl)propan]dihydrochlorid) in 21,6 g Wasser hinzugefügt.
Nach 15 Minuten wird der Thermostat auf T = 70°C gestellt
Nach 3 h Reaktionszeit wird der Reaktorinhalt auf 20 °C abgekühlt. Der Reaktorinhalt wird mit 20,16 g NaOH (50 %ig) auf einen pH Wert von ca. 8,1 gestellt.

Das entstandene bräunliche leicht trübe Produkt hat einen Feststoffgehalt von 47 Gew.-%. Die mittlere Molmasse des Polymers (Mw) beträgt 35.200 g/mol. Die Polydispersität ist 1,57.

**Tabelle 4: Übersicht der analytischen Daten**

| Vergleichsbeispiel | Mw g/mol | Feststoff | PD |
|---|---|---|---|
| 1 | 35200 | 46,8 | 1,57 |

### Vergleichsbeispiel 2:

In einem Glasreaktor, ausgestattet mit Rührer, pH-Elektrode, Thermometer, Redoxelektrode, N₂-Zugang, werden 108,7 g deionisiertes Wasser und 112,5 g VOB-135 EO vorgelegt und auf eine Polymerisationsstarttemperatur von 15°C gekühlt (Vorlage).
In einem separaten Zulaufgefäß werden 22,12 g HEA-P mit 199,08 g deionisiertem Wasser und 9,7 g (50 %iger) NaOH homogen vermischt (Lösung A). Parallel wird eine 6 %-ige Lösung einer Mischung aus Natriumsulfit, dem Dinatriumsalz der 2-Hydroxy-2-sulfinatoessigsäure und dem Dinatriumsalz der 2-Hydroxy-2-sulfonatoessigsäure (Brüggolit FF6 der Brüggemann GmbH) in Wasser hergestellt (Lösung B). Unter Rühren und Kühlen werden zunächst 109,53 g der Lösung A zur Vorlage gegeben und danach 0,77 g 3-Mercaptopropionsäure (MPS) zur restlichen Lösung A gegeben. Anschließend werden nacheinander 0,14 g 3-Mercaptopropionsäure und 0,089 g Eisen-II-sulfat-Heptahydrat (FeSO₄) in die Vorlagelösung gegeben. Diese wird anschließend mit NaOH (50 %ig) auf einen Start-pH von 5,3 eingestellt. Mit der Zugabe von 0,75 g Wasserstoffperoxid (30 %ige Lösung in Wasser) zum Vorlagegemisch wird die Reaktion gestartet. Zeitgleich wird mit der Zugabe von Lösung A und Lösung B zur gerührten Vorlage begonnen. Lösung A wird über 30 min zugegeben. Lösung B wird parallel mit einer konstanten Dosiergeschwindigkeit von 13,5 ml/h solange zugegeben, bis kein Peroxid mehr in der Lösung nachgewiesen werden kann. Anschließend wird die erhaltene Polymerlösung mit 50 %iger Natriumhydroxid-Lösung auf einen pH-Wert von 6,5 eingestellt. Das erhaltene Copolymer fällt in einer Lösung an, die einen Feststoffgehalt von 29,3 Gew.-% aufweist. Das Gewichtsmittel der Molmasse des Copolymers beträgt 40.400 g/mol, die Polydispersität 1,6.

**Tabelle 5: Übersicht der analytischen Daten**

| Vergleichsbeispiel | Mw g/mol | Feststoff | PD |
|---|---|---|---|
| 2 | 40.400 | 29.3 | 1.6 |

### Anwendungsbeispiele:

Die Dispergiermittel aus den Synthesebeispielen werden auf ihre Eigenschaften als Gipsverflüssiger in einem geeigneten Testsystem untersucht.
Es werden zunächst 300 g β-Halbhydrat aus der Rauchgasentschwefelung mit fein gemahlenem Calciumsulfat Dihydrat (Gips) als Beschleuniger vorhomogenisiert und in 187 g Wasser eingestreut. Das Dispergiermittel wird zuvor in das Anmachwasser eingemischt. Anschließend wird der Ansatz für 15 Sekunden stehengelassen. Danach wird das Rühren mit dem Hobart-Mischer für weitere 15 Sekunden bei Stufe II (285 Umdrehungen pro Minute) gestartet. Nach dem Befüllen eines Zylinders (h = 10 cm, d = 5 cm), der nach 60 Sekunden angehoben wird, erfolgt die Bestimmung des Fließmaßes. Die Erstarrungszeit wird mit der sogenannten Messerschnitt-Methode (nach DIN EN 13279-2) bestimmt.

**Tabelle 6: Anwendungsbeispiele bei einem Wasser zu Gips Verhältnis von 0,655.**

| Dispergiermittel | FM % | Beschleuniger [g] | Fließmaß [cm] | Messerschnitt [min:sec] | Wasser |
|---|---|---|---|---|---|
| Vergleichsbeispiel 1 | 0,12 | 0,028 | 15,8 | **2:20** | 0,655 |
| Vergleichsbeispiel 2 | 0,12 | 0,150 | 20,5 | **2:15** | 0,655 |
| Beispiel 1 | 0,07 | 0,035 | 20,2 | **2:20** | 0,655 |
| Beispiel 2 | 0,10 | 0,057 | 20,1 | **2:30** | 0,655 |

| | | | | | |
|---|---|---|---|---|---|
| FM % = eingesetzte Menge an Dispergiermittel (Feststoff) bezogen auf die Menge an β-Halbhydrat in Gewichtsprozent. Beschleuniger = eingesetzte Menge an fein gemahlenem Calciumsulfat Dihydrat (Gips). | | | | | |

Das erfindungsgemäße Beispiel 1 zeigt eine sehr gute Verflüssigungswirkung, erkennbar an der geringen Dosierung an Dispergiermittel um das gleiche Fließmaß im Vergleich zu einem Polyphosphatether auf Basis von VOB-135 EO und HEA-P zu erreichen (Vergleichsbeispiel 2). Mit einem Polyphosphatether auf Basis von VOB-135 EO und HEMA-P (Vergleichsbeispiel 1) lässt sich sogar bei nahezu doppelter Dosierung zu Beispiel 1 nicht die gleiche Verflüssigungswirkung erzielen.

Auch das erfindungsgemäße Beispiel 2 auf Basis Acrylsäure zeigt eine sehr gute Verflüssigungswirkung.

## Patentansprüche

1. Zusammensetzung umfassend
A) mindestens ein Bindemittels auf Basis von Calciumsulfat und
B) mindestens ein Polymer, erhältlich durch Polymerisation von Monomeren, umfassend eine ungesättigte Verbindungen der allgemeinen Formel (I) 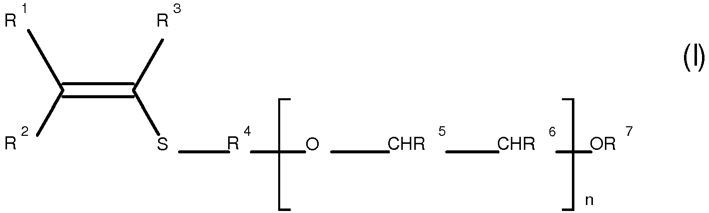 wobei
R¹, R², R³ unabhängig voneinander, gleich oder verschieden, H, CH₃,
R⁴ lineares oder verzweigtes C₁-C₃₀-Alkylen,
R⁵, R⁶ unabhängig voneinander, gleich oder verschieden, H, C₁-C₂₀-Alkyl, C₃-C₁₅-Cycloalkyl, Aryl, -CH₂-O-C₁-C₂₀-Alkyl, CH₂-O-C₂-C₂₀-Alkenyl, wobei R⁵ und R⁶ auch gemeinsam ein C₃-C₆-Alkylen bilden können,
R⁷ H, C₁-C₄-Alkyl, 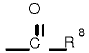
R⁸ C₁-C₂₂-Alkyl, C₂-C₂₂-Alkenyl, und
n eine ganze Zahl von 2 bis 200 bedeuten.

2. Zusammensetzung gemäß Anspruch 1, **dadurch gekennzeichnet, dass** R⁴ für eine C₂-C₄-Alkylengruppe, R⁵, R⁶ unabhängig voneinander, gleich oder verschieden für eine Gruppe ausgewählt aus H, -CH₃, -CH₂-CH₃, -C₃-C₁₁-Alkyl, C₁₂-C₂₂-Alkyl, Phenyl, -CH₂-O-C₁-C₁₀-Alkyl, CH₂-O-C₂-C₁₀-Alkenyl, R⁷ für H oder C₁-C₄-Alkyl und n für 5 bis 140 stehen.

3. Zusammensetzung gemäß Anspruch 1, **dadurch gekennzeichnet, dass** es sich um ungesättigte Verbindungen (la) 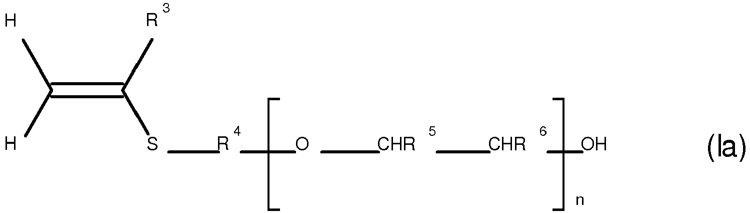 handelt, wobei
R³ für H oder Methyl,
R⁴ für eine lineare oder verzweigte C₂-C₁₀-Alkylengruppe,
R⁵, R⁶ unabhängig voneinander für H, Methyl oder Ethyl stehen, mit der Maßgabe, dass die Summe der Kohlenstoffatome in den Resten R⁵ und R⁶ pro Alkoxygruppe jeweils 0 bis 2 beträgt, und
n für 5 bis 160 steht.

4. Zusammensetzung gemäß Anspruch 1, **dadurch gekennzeichnet, dass** es sich um ungesättigte Verbindungen (Ib) 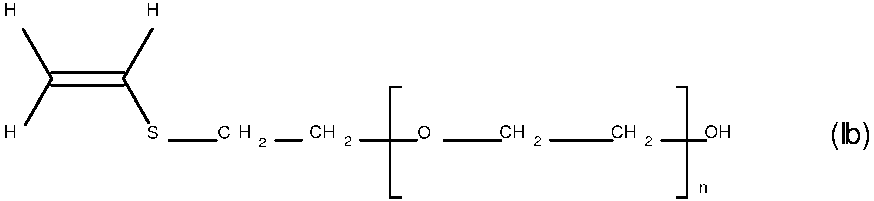 handelt, wobei n für 20 bis 140 steht.

5. Zusammensetzung gemäß Anspruch 4, **dadurch gekennzeichnet, dass** n für 60 bis 140 steht.

6. Zusammensetzung gemäß einem der Ansprüche 1 bis 5, **dadurch gekennzeichnet, dass** das Polymer mindestens ein weiteres von der Verbindung der allgemeinen Formel (I) verschiedenes Monomer im Polymer enthält.

7. Zusammensetzung gemäß Anspruch 6, **dadurch gekennzeichnet, dass** es sich bei dem mindestens einen weiteren Monomer um mindestens ein monoethylenisch ungesättigtes Monomer umfassend mindestens eine Säuregruppen handelt, wobei die Säuregruppe auch ganz oder teilweise neutralisiert sein kann.

8. Zusammensetzung gemäß Anspruch 7, **dadurch gekennzeichnet, dass** es sich bei der Säuregruppe um mindestens eine aus der Reihe Carbonsäure-, Sulfonsäure-, Phosphor- oder Phosphonsäuregruppe handelt.

9. Zusammensetzung gemäß Anspruch 8, **dadurch gekennzeichnet, dass** das Polymer mindestens ein Monomer mit Phosphor- oder Phosphonsäuregruppen ausgewählt aus der Gruppe von Vinylphosphonsäure, Ester von Hydroxyethyl-, Hydroxypropyl- oder Hydroxybutyl(meth)acrylat mit (Poly)Phosphorsäure, Phosphorsäuremonovinylester, Allylphosphonsäure, Phosphorsäuremonoallylester, 3-Butenylphosphonsäure, Phosphorsäure(mono-3-butenyl)ester, Phosphorsäuremono-(4-vinyloxybutyl)ester, Phosphorsäuremono-(-2-hydroxy-3-vinyloxy-propyl)ester, Phosphorsäuremono-(1-phosphonoxymethyl-2-vinyloxy-ethyl)-ester, Phosphorsäuremono-(3-allyloxy-2-hydroxypropyl)ester, Phosphorsäuremono-2-(allylox-1-phosphonoxymethyl-ethyl)ester, 2-Hydroxy-4-vinyloxymethyl-1,3,2-dioxaphosphol, 2-Hydroxy-4-allyloxymethyl-1,3,2-dioxaphosphol bzw. Salze davon umfasst.

10. Zusammensetzung gemäß einem der Ansprüche 1 bis 9, **dadurch gekennzeichnet, dass** in dem Polymer 5 bis 99,9 Gew.-% ungesättigte Verbindungen der allgemeinen Formel (I), bezogen auf die Gesamtmenge an Monomeren enthalten sind.

11. Zusammensetzung gemäß einem der Ansprüche 1 bis 9, **dadurch gekennzeichnet, dass** in dem Polymer 5 bis 99,9 Gew.-% ungesättigte Verbindungen der allgemeinen Formel (I) und von 95 bis 0,1 Gew.-% weitere monoethylenisch ungesättigte Monomere, jeweils bezogen auf die Gesamtmenge an Monomeren, enthalten sind.

12. Zusammensetzung gemäß einem der Ansprüche 1 bis 11, **dadurch gekennzeichnet, dass** es sich bei dem Bindemittel auf Basis von Calciumsulfat um α-Halbhydrat, α/β-Halbhydrat, β-Halbhydrat, natürliches Anhydrit, synthetisches Anhydrit, aus der Rauchgasentschwefelung erhaltenes Anhydrit, und/oder Mischungen von zwei oder mehreren davon handelt.

13. Zusammensetzung gemäß einem der Ansprüche 1 bis 12, **dadurch gekennzeichnet, dass** die Zusammensetzung, bezogen auf die Trockenmasse, mindestens 10 Gew.-% A) des mindestens einen Bindemittels auf Basis von Calciumsulfat und zwischen 0,005 und 5 Gew.-% B) des mindestens einen Polymers umfasst.

14. Formkörper, hergestellt durch Abbinden einer Zusammensetzung nach einem der Ansprüche 1 bis 13.

15. Formkörper nach Anspruch 14, **dadurch gekennzeichnet, dass** es sich um eine Gipskartonplatte, Gipswandbauplatte, Estrich oder eine Spachtelmasse handelt.

## Claims

1. Composition comprising
A) at least one binder based on calcium sulfate and
B) at least one polymer obtainable by polymerization of monomers comprising an unsaturated compound of the general formula (I) 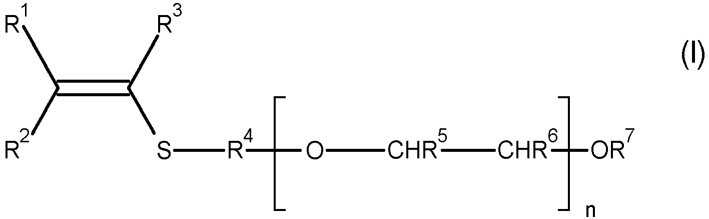 where
R¹, R², R³ are identical or different and are each, independently of one another, H, CH₃,
R⁴ is linear or branched C₁-C₃₀-alkylene,
R⁵, R⁶ are identical or different and are each, independently of one another, H, C₁-C₂₀-alkyl, C₃-C₁₅-cycloalkyl, aryl, -CH₂-O-C₁-C₂₀-alkyl, CH₂-O-C₂-C₂₀-alkenyl, where R⁵ and R⁶ can together also form a C₃-C₆-alkylene,
R⁷ is H, C₁-C₄-alkyl, 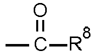
R⁸ is C₁-C₂₂-alkyl, C₂-C₂₂-alkenyl, and
n is an integer from 2 to 200.

2. Composition according to Claim 1, **characterized in that** R⁴ is a C₂-C₄-alkylene group, R⁵, R⁶ are identical or different and are each, independently of one another, a group selected from among H, -CH₃, -CH₂-CH₃, -C₃-C₁₁-alkyl, C₁₂-C₂₂-alkyl, phenyl, -CH₂-O-C₁-C₁₀-alkyl, CH₂-O-C₂-C₁₀-alkenyl, R⁷ is H or C₁-C₄-alkyl and n is from 5 to 140.

3. Composition according to Claim 1, **characterized in that** the unsaturated compounds are unsaturated compounds (Ia) 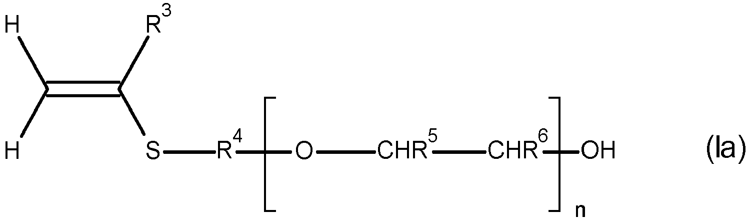 where
R³ is H or methyl,
R⁴ is a linear or branched C₂-C₁₀-alkylene group,
R⁵, R⁶ are each, independently of one another, H, methyl or ethyl, with the proviso that the sum of the carbon atoms in the radicals R⁵ and R⁶ is in each case from 0 to 2 per alkoxy group, and
n is from 5 to 160.

4. Composition according to Claim 1, **characterized in that** the unsaturated compounds are unsaturated compounds (Ib) 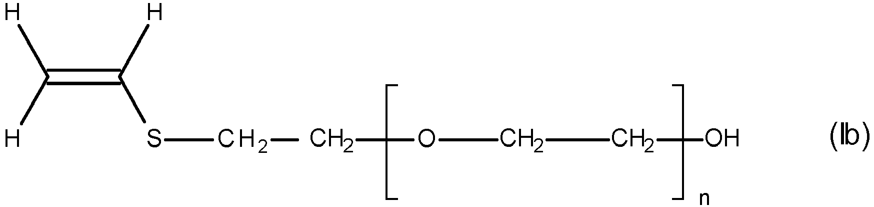 where n is from 20 to 140.

5. Composition according to Claim 4, **characterized in that** n is from 60 to 140.

6. Composition according to any of Claims 1 to 5, **characterized in that** the polymer comprises at least one further monomer which is different from the compound of the general formula (I) in the polymer.

7. Composition according to Claim 6, **characterized in that** the at least one further monomer is at least one monoethylenically unsaturated monomer comprising at least one acid group, where the acid group can also be entirely or partly neutralized.

8. Composition according to Claim 7, **characterized in that** the acid group is at least one group selected from the group consisting of carboxylic acid, sulfonic acid, phosphoric acid or phosphonic acid groups.

9. Composition according to Claim 8, **characterized in that** the polymer comprises at least one monomer having phosphoric or phosphonic acid groups selected from the group consisting of vinylphosphonic acid, esters of hydroxyethyl, hydroxypropyl or hydroxybutyl (meh)acrylate with (poly)phosphoric acid, monovinyl phosphate, allylphosphonic acid, monoallyl phosphate, 3-butenylphosphonic acid, mono-3-butenyl phosphate, mono(4-vinyloxybutyl) phosphate, mono(2-hydroxy-3-vinyloxypropyl) phosphate, mono(1-phosphonoxymethyl-2-vinyloxyethyl) phosphate, mono(3-allyloxy-2-hydroxypropyl) phosphate, mono-2-(allylox-1-phosphonoxymethylethyl) phosphate, 2-hydroxy-4-vinyloxymethyl-1,3,2-dioxaphosphole, 2-hydroxy-4-allyloxymethyl-1,3,2-dioxaphosphole and salts thereof.

10. Composition according to any of Claims 1 to 9, **characterized in that** from 5 to 99.9% by weight of unsaturated compounds of the general formula (I), based on the total amount of monomers, are comprised in the polymer.

11. Composition according to any of Claims 1 to 9, **characterized in that** from 5 to 99.9% by weight of unsaturated compounds of the general formula (I) and from 95 to 0.1% by weight of further monoethylenically unsaturated monomers, in each case based on the total amount of monomers, are comprised in the polymer.

12. Composition according to any of Claims 1 to 11, **characterized in that** the binder based on calcium sulfate is α-hemihydrate, α/β-hemihydrate, β-hemihydrate, natural anhydrite, synthetic anhydrite, anhydrite obtained from flue gas desulfurization and/or mixtures of two or more thereof.

13. Composition according to any of Claims 1 to 12, **characterized in that** the composition comprises, based on the dry mass, at least 10% by weight of A) the at least one binder based on calcium sulfate and from 0.005 to 5% by weight of B) the at least one polymer.

14. Molding produced by setting of a composition according to any of Claims 1 to 13.

15. Molding according to Claim 14, **characterized in that** the molding is a gypsum plasterboard, gypsum wallboard, screed or a knifing filler.

## Revendications

1. Composition, comprenant :
A) au moins un liant à base de sulfate de calcium et
B) au moins un polymère, pouvant être obtenu par polymérisation de monomères, comprenant un composé insaturé de formule générale (I) 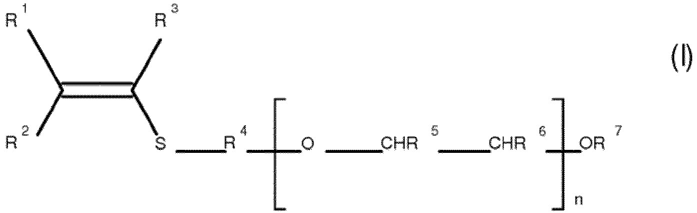 dans laquelle
R¹, R², R³ signifient indépendamment les uns des autres, de manière identique ou différente, H, CH₃,
R⁴ signifie alkylène en C₁-C₃₀ linéaire ou ramifié, R⁵, R⁶ signifient indépendamment l'un de l'autre, de manière identique ou différente, H, alkyle en C₁-C₂₀, cycloalkyle en C₃-C₁₅, aryle, -CH₂-O-alkyle en C₁-C₂₀, CH₂-O-alcényle en C₂-C₂₀, R⁵ et R⁶ pouvant également former ensemble un alkylène en C₃-C₆,
R⁷ signifie H, alkyle en C₁-C₄, 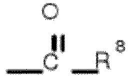
R⁸ signifie alkyle en C₁-C₂₂, alcényle en C₂-C₂₂, et
n signifie un nombre entier de 2 à 200.

2. Composition selon la revendication 1, **caractérisée en ce que** R⁴ représente un groupe alkylène en C₂-C₄, R⁵, R⁶ représentent indépendamment l'un de l'autre, de manière identique ou différente, un groupe choisi parmi H, -CH₃, -CH₂-CH₃, alkyle en C₃-C₁₁, alkyle en C₁₂-C₂₂, phényle, -CH₂-O-alkyle en C₁-C₁₀, CH₂-O-alcényle en C₂-C₁₀, R⁷ représente H ou alkyle en C₁-C₄, et n représente 5 à 140.

3. Composition selon la revendication 1, **caractérisée en ce qu'**il s'agit de composés insaturés (Ia) 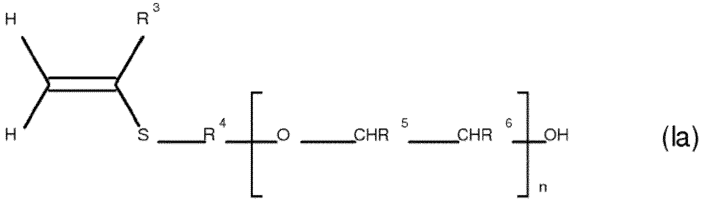 dans lesquels
R³ représente H ou méthyle,
R⁴ représente un groupe alkylène en C₂-C₁₀ linéaire ou ramifié,
R⁵, R⁶ représentent indépendamment l'un de l'autre H, méthyle ou éthyle, à condition que la somme des atomes de carbone dans les radicaux R⁵ et R⁶ par groupe alcoxy soit à chaque fois de 0 à 2, et
n représente 5 à 160.

4. Composition selon la revendication 1, **caractérisée en ce qu'**il s'agit de composés insaturés (Ib) 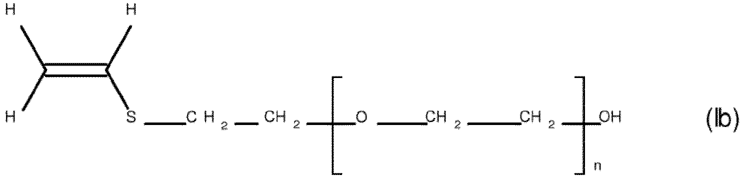 dans lesquels n représente 20 à 140.

5. Composition selon la revendication 4, **caractérisée en ce que** n représente 60 à 140.

6. Composition selon l'une quelconque des revendications 1 à 5, **caractérisée en ce que** le polymère contient au moins un autre monomère différent du composé de formule générale (I) dans le polymère.

7. Composition selon la revendication 6, **caractérisée en ce que** ledit au moins un autre monomère est au moins un monomère monoéthyléniquement insaturé comprenant au moins un groupe acide, le groupe acide pouvant également être neutralisé en totalité ou en partie.

8. Composition selon la revendication 7, **caractérisée en ce que** le groupe acide est au moins un de la série constituée par un groupe acide carboxylique, acide sulfonique, acide phosphorique ou phosphonique.

9. Composition selon la revendication 8, **caractérisée en ce que** le polymère comprend au moins un monomère contenant des groupes acide phosphorique ou phosphonique choisi dans le groupe constitué par l'acide vinylphosphonique, les esters de (méth)acrylate d'hydroxyéthyle, d'hydroxypropyle ou d'hydroxybutyle avec de l'acide (poly)phosphorique, l'ester monovinylique de l'acide phosphorique, l'acide allylphosphonique, l'ester monoallylique de l'acide phosphorique, l'acide 3-buténylphosphonique, l'ester mono-3-buténylique de l'acide phosphorique, l'ester mono-(4-vinyloxybutylique) de l'acide phosphorique, l'ester mono-(2-hydroxy-3-vinyloxy-propylique) de l'acide phosphorique, l'ester mono-(1-phosphonoxyméthyl-2-vinyloxy-éthylique) de l'acide phosphorique, l'ester mono-(3-allyloxy-2-hydroxy-propylique) de l'acide phosphorique, l'ester mono-2-(allyloxy-1-phosphonoxyméthyl-éthylique) de l'acide phosphorique, le 2-hydroxy-4-vinyloxyméthyl-1,3,2-dioxaphosphol, le 2-hydroxy-4-allyloxyméthyl-1,3,2-dioxaphosphol et leurs sels.

10. Composition selon l'une quelconque des revendications 1 à 9, **caractérisée en ce que** le polymère contient 5 à 99,9 % en poids de composés insaturés de formule générale (I), par rapport à la quantité totale de monomères.

11. Composition selon l'une quelconque des revendications 1 à 9, **caractérisée en ce que** le polymère contient 5 à 99,9 % en poids de composés insaturés de formule générale (I) et 95 à 0,1 % en poids d'autres monomères monoéthyléniquement insaturés, à chaque fois par rapport à la quantité totale de monomères.

12. Composition selon l'une quelconque des revendications 1 à 11, **caractérisée en ce que** le liant à base de sulfate de calcium est l'α-semihydrate, l'α,β-semihydrate, le β-semihydrate, l'anhydrite naturel, l'anhydrite synthétique, l'anhydride obtenu par la désulfuration de gaz de fumée et/ou les mélanges de deux ou plus d'entre eux.

13. Composition selon l'une quelconque des revendications 1 à 12, **caractérisée en ce que** la composition comprend, par rapport à la masse sèche, au moins 10 % en poids de A) ledit au moins un liant à base de sulfate de calcium et entre 0,005 et 5 % en poids de B) ledit au moins un polymère.

14. Corps moulé, fabriqué par durcissement d'une composition selon l'une quelconque des revendications 1 à 13.

15. Corps moulé selon la revendication 14, **caractérisé en ce qu'**il s'agit d'un panneau en plâtre, d'un panneau de mur en plâtre, d'une chape ou d'une masse de scellement.
